# EUROPÄISCHE PATENTSCHRIFT

(11) **EP 4 296 028 B1**
(45) Veröffentlichungstag und Bekanntmachung des Hinweises auf die Patenterteilung: **16.04.2025**
(21) Anmeldenummer: 23180867.6
(22) Anmeldetag: 22.06.2023
(51) Int. Cl.: B29B 17/02

(54) **VERFAHREN ZUR RÜCKGEWINNUNG VON KUNSTSTOFFEN**
METHOD FOR RECOVERING PLASTICS
PROCÉDÉ DE RÉCUPÉRATION DE MATIÈRES PLASTIQUES

(30) Priorität: 24.06.2022 EP 22180946
(43) Veröffentlichungstag der Anmeldung: 27.12.2023
(73) Patentinhaber: Bage Plastics GmbH, 4502 St. Marien (AT)
(72) Erfinder: Schwesig, Arthur, 3263 Randegg (AT); Mattauch, Andreas, 98544 Zella-Mehlis (DE); Baum, Philipp, 4331 Naarn (AT); Geyer, Manfred-Mathias, 4407 Dietach (AT); Strasser, Johann, 4310 Mauthausen (AT)
(74) Vertreter: Kudla, Karsten

(56) Entgegenhaltungen:
- WO-A1-2009/061556
- CN-A- 111 251 507
- DE-T2- 69 708 111
- US-A- 5 653 867
- US-A1- 2003 027 877
- US-B1- 6 460 788
- US-B2- 8 479 923
- US-B2- 9 056 403

## Beschreibung

Die Erfindung betrifft ein Verfahren zur Rückgewinnung von Kunststoffen aus einem Gemisch von mindestens zwei Polymeren, wobei ein Polymer mit einem Anteil von 1 bis 99 Gew.-% enthalten ist.

Zur Reduktion der Abfallmengen wird gefordert, einen möglichst großen Anteil der anfallenden Abfallmengen zu recyceln und dem Wertstoffkreislauf erneut zuzuführen. Hier ist insbesondere die Wiederverwertung und Kreislaufführung von Bestandteilen von Elektroaltgeräten, insbesondere von weniger werthaltigen Kunststoffkomponenten problematisch. So verursachen Elektroaltgeräte aufgrund einer unvollständigen Kreislaufführung insbesondere der halogenhaltigen Kunststoffe und einer nicht optimalen Verwertung nach der Abfallbehandlung erhebliche Schäden im Ökosystem.

Insbesondere bei der gewünschten Kreislaufführung der Kunststoffe aus Elektroaltgeräten stellt die Komplexität der Kunststoffzusammensetzung eine Besonderheit dar. So führt eine der häufigsten Abfallbehandlungsmethoden, nämlich die Trennung nach der Dichte, bei Elektroaltgeräten zu nicht zufriedenstellenden Ergebnissen, da sich bei Dichten von weniger als 1 g/cm³ neben Polyolefinen, insbesondere Polyethylen niedriger und hoher Dichte (LDPE, HDPE), Polypropylenhomo- und -copolymeren auch Polyurethanschäume, Polyvinylchloridschäume, Holz, Papier, Biofasern und weitere Komponenten finden. Auch bei höheren Dichten finden sich ähnlich vielfältige Zusammensetzungen. So finden sich zum Beispiel bei einer Dichtefraktion von 1,00 bis 1,05 g/cm³ neben den gewünschten hochschlagfesten Polystyrolfraktionen (HIPS) auch gefüllte Polypropylentypen, flammgehemmte Polypropylentypen, Polyamide (PA), insbesondere PA 6.10, PA 6.12, PA 11 und PA 12. Bei noch höheren Dichten findet sich Polybutylenterephthalat (PBT) sowohl bei Dichten von mehr als 1,4 g/cm³ in denen Polyoxymethlene (POM), insbesondere POM-h und POM-c abgetrennt werden, als auch bei Dichten von weniger als 1,3 g/cm³, bei der flammgehemmte Polycarbonat (PC) und Acrylnitrilbutadienstyrol (ABS) abgetrennt werden. Aufgrund seiner Variantenvielfalt findet sich PVC in allen Dichtebereichen und verschleppt in diese zudem mit hoher Wahrscheinlichkeit auch Weichmacher und Schwermetalle.

Neben einer Dichtetrennung werden vielfach zur Trennung auch Nah-Infrarot-Sortiermaschinen (NIR-Sorter) eingesetzt. Aufgrund der technischen Anforderungen bei Elektrogeräten ist die häufigste Farbe aufgrund des enthaltenen Rußes (Carbon black) jedoch schwarz. Der Ruß garantiert eine antistatische oder auch leitfähige Oberfläche, um Elektrogeräte sicherer zu machen. Leider können NIR-Sorter mit Ruß gefüllte Kunststoffe nicht erkennen und somit nicht sortieren. Die elektrostatisch veränderten Eigenschaften der Kunststoffe erschweren zudem auch häufig die Trennung mit elektrostatischen Sortiermaschinen. Aus diesem Grund existiert bis heute kein perfekter Prozess, Elektroaltgeräte effizient und vollständig aufzuarbeiten. Erhebliche Anteile an Elektroaltgeräten werden entweder verbrannt oder illegal entsorgt.

Selbst die recycelten Kunststoffe finden sich in der Regel nur in Downcycling-Anwendungen wie Straßenschildfüßen, Parkbänken oder Kleiderbügeln, jedoch nicht in neuen Elektrogeräten. Grund hierfür ist, dass nicht nur für die Trennung kein perfekter Prozess bekannt ist, sondern auch ein entsprechender Prozess für die Compoundierung zu einem Granulat für die kunststoffverarbeitende Industrie fehlt. Durch fehlende Reinheit, veralterte Kunststoffe, die oft vor bis zu 40 Jahren hergestellt wurden, und Alterung durch Gebrauch der Elektrogeräte erfüllen die Eigenschaften der recycelten Kunststoffe nicht die Anforderungen der modernen Elektronikindustrie. Alle Extruder, die derzeit für die Compoundierung von Recyclingkunststoffen angeboten werden, sind auf Massenabfallströme, beispielsweise Verpackungen oder Kunststoffflaschen, ausgelegt. Für Kunststoffe aus Elektroaltgeräten sind die aktuellen Aufbereitungs- und Produktionsprozesse nicht aufeinander abgestimmt. Bei der Aufbereitung von Elektroaltgeräten liegt der Fokus derzeit nicht im Recycling von Kunststoffen, sondern in der Rückgewinnung der Metalle.

Im Allgemeinen werden bei der Aufbereitung von Elektroaltgeräten zunächst wertvolle oder schädliche Komponenten, beispielsweise Platinen zur Rückgewinnung von Edelmetallen, Kabel zur Rückgewinnung von Kupfer oder Batterien zur Kreislaufführung von Quecksilber, Lithium oder Cadmium händisch demontiert. Die zurückbleibende Restfraktion enthält neben Gehäusen und Bauteilen aus Metallen oder Kunststoffen in der Regel noch kleine Elektronikbauteile und Kunststoffbauteile aus einer Vielzahl unterschiedlicher Kunststoffe. Die Hauptmasse bilden unterschiedliche Metalle und das Hauptvolumen unterschiedliche Kunststoffe. Hierbei stellen hochschlagfestes Polystyrol (HIPS) und Polyacrylnitrilbutadienstyrol (ABS) mit etwa 50 % der Kunststoffe den größten Teil. Neben HIPS und ABS umfassen die Kunststoffe noch bis zu 10 % Polypropylen (PP) und eine Vielzahl kleinerer Anteile von weiteren Thermoplasten, Elastomeren und Duroplasten, von denen Polyamide (PA) mit einem Anteil von etwa 5 % und Polycarbonate (PC) mit einem Anteil von etwa 3 % die wichtigsten sind.

Die Abtrennung der Metalle erfolgt in der Regel in Trockenprozessen mittels Magneten und Wirbelstromabscheidern. Kupfer und kleinere Leiterplatten werden auch mit Hilfe von Farbsortiersystemen abgetrennt. Übrig bleibt eine kunststoffreiche Mischung, die HIPS, ABS und PP als leicht recycelbare Komponenten enthält. Derzeit wird diese kunststoffreiche Mischung in der Regel in Nassverfahren mittels Dichtetrennung mit den vorstehend erwähnten Nachteilen aufgeschlossen. Aufgrund der in der Regel in den einzelnen durch die Dichtetrennung gewonnenen enthaltenen Fremdkomponenten können diese nicht als gleichwertiger Kunststoff in den Kreislauf zurückgeführt werden. Insbesondere Schäume transportieren aufgrund ihrer großen Oberfläche eine Vielzahl wertmindernder Verunreinigungen, beispielsweise Spuren von Schwermetallen, POPs (persistent organic polutants) oder störende Geruchsstoffe, in das Rezyklat. Dieses lässt sich daher nur noch im sogenanntem Downcycling für minderwertigere Produkte verwenden.

Die bei der Dichtetrennung gewonnene schwere Fraktion enthält die styrolbasierten Polymere HIPS und ABS, die zum Beispiel durch triboelektrische oder spektroskopische Sortierung weiter separiert werden. Alle bekannten Verfahren ignorieren jedoch, dass die in Elektrogeräten eingesetzten Kunststoffe in der Regel stark additiviert sind oder als hochkomplexe compoundierte Blends mit sehr spezifischen Eigenschaften insbesondere hinsichtlich Alterung, Leitfähigkeit, Festigkeit, Fließfähigkeit, Schallabsorption oder Chemikalienresistenz eingesetzt werden. Dieses Ausblenden der Komplexität des Kunststoffgemischs führt dazu, dass etwa die Hälfte der kunststoffreichen Mischung als komplexes Abfallgemisch verloren geht und die Effizienz und Ausbeute der Verfahren reduziert ist.

Verfahren zur Rückgewinnung von Kunststoffen aus dem Recycling von Elektroaltgeräten sind zum Beispiel in der WO-A 2006/131377, der WO-A 2014/130546 oder der EP-A 2 163 369 beschrieben.

Ein Verfahren zur Trennung unterschiedlicher Polymeere aus Abfällen mittels Dichtetrennung ist beispielsweise aus der US-B 6,460788 bekannt.

Nachteil aller bekannter Verfahren ist es jedoch, dass die eingesetzten Trennschritte entweder zu einer unzureichenden Trennung und damit zu verunreinigten Fraktionen oder bei einer ausreichenden Trennung, wie sie durch das in der EP-A 2 163 369 beschriebene Verfahren erreicht werden kann, aufgrund der aufwendigen Schritte zur Größenreduktion zu einem Verlustanteil der Kunststoffe von 20 bis 40 % führen kann.

Aufgabe der vorliegenden Erfindung ist es daher, ein Verfahren bereitzustellen, das eine Auftrennung der Kunststoffe derart erreicht wird, dass eine effiziente Kreislaufführung möglich ist und die gewonnenen Kunststoffe nicht nur in Downcycling-Prozessen eingesetzt werden können und bei dem zudem der Verlustanteil an Kunststoffen minimiert wird.

Diese Aufgabe wird gelöst durch ein Verfahren zur Rückgewinnung von Kunststoffen aus einem Gemisch von mindestens zwei Polymeren, wobei ein Polymer mit einem Anteil von 1 bis 99 Gew.-% enthalten ist, umfassend:
(a) Durchführen einer ersten Dichtetrennung bei einer Dichte im Bereich von 1,14 bis 1,18 g/cm³, wobei eine erste leichten Fraktion, die Polyolefine und styrolbasierte Polymere enthält, und eine erste schwere Fraktion erhalten werden;
(b) Zuführen der ersten leichten Fraktion zu einer zweiten Dichtetrennung bei einer Dichte im Bereich von 1,00 bis 1,03 g/cm³, wobei eine zweite leichte Fraktion, die ungefüllte Polyolefine enthält, und eine zweite schwere Fraktion, die styrolbasierte Polymere und gegebenenfalls gefüllte Polyolefine enthält, erhalten werden;
(c) Zuführen der ersten schweren Fraktion zu einer dritten Dichtetrennung bei einer Dichte im Bereich von 1,18 bis 1,24 g/cm³, wobei die erste schwere Fraktion in eine dritte leichte Fraktion, die Polyamide, Polycarbonate und Methacrylat-basierte Polymere enthält, sowie eine dritte schwere, Polyoxymethylen, hoch gefüllte Polymere und halogenhaltige Polymere enthaltende Fraktion getrennt wird;
(d) Auftrennen aller Fraktionen in im wesentlichen sortenreine Polymere enthaltende Fraktionen,
wobei vor der dritten Dichtetrennung metallhaltige Komponenten aus der ersten schweren Fraktion entfernt werden.

Überraschenderweise hat sich gezeigt, dass durch die erste Dichtetrennung bei einer Dichte im Bereich von 1,14 bis 1,18 g/cm³ gegenüber den bekannten Verfahren, in denen die Dichtetrennung zur Abtrennung von styrolbasierten Polymeren bei einer Dichte von 1,08 g/cm³ durchgeführt wird, der Anteil an styrolbasierten Polymeren, insbesondere HIPS und ABS, und Polyolefinen, insbesondere PP, der durch das Verfahren aus dem Gemisch zurückgewonnen werden kann, maximiert wird. Zudem hat sich gezeigt, dass sich trotz der vergleichsweisen hohen Dichte der ersten Dichtetrennung der Halogenanteil, insbesondere der Anteil an Brom aus bromierten Flammhemmern, nicht erhöht.

Erfindungsgemäß wird zunächst eine erste Dichtetrennung bei einer Dichte im Bereich von 1,14 bis 1,18 g/cm³, bevorzugt bei einer Dichte im Bereich von 1,14 bis 1,17 g/cm³ und insbesondere bei einer Dichte im Bereich von 1,15 bis 1,16 g/cm³, beispielsweise einer Dichte von 1,15 g/cm³ durchgeführt, bei der die erste schwere Fraktion und die erste leichte Fraktion erhalten werden. Durch die Dichtetrennung bei einer vergleichsweise hohen Dichte enthält die erste leichte Fraktion auch styrolbasierte Polymere, die aufgrund ihrer Additivierung eine höhere Dichte aufweisen als üblich. Hierdurch kann ein sehr viel größerer Anteil an styrolbasierten Polymeren aus dem Kunststoffgemisch zurückgewonnen werden als mit den aus dem Stand der Technik bekannten Verfahren. Gegenüber den aus dem Stand der Technik bekannten Verfahren kann der durch die erste Dichtetrennung bei einer Dichte im Bereich von 1,14 bis 1,18 g/cm³ gewonnene Anteil an styrolbasierten Polymeren bis zu doppelt so groß sein.

Die erste schwere Fraktion enthält insbesondere Abfallstoffe und Metalle sowie einen Anteil an Polymeren mit einer hohen Dichte, insbesondere Kunststoffe, die Halogenverbindungen enthalten, beispielsweise Polyvinylchlorid (PVC) oder Polymere mit bromierten Flammhemmern, Kunststoffe mit einem hohen Anteil an Füllstoffen, beispielsweise Kohlenstofffasern oder Glasfasern, sowie Polycarbonate (PC) und Kunststoffblends, die Polycarbonat enthalten, beispielsweise PC/ABS oder PC-Alloys, Polyamide, insbesondere PA6 bis PA12, und Polymethacrylate, beispielsweise Polymethylmethacrylat (PMMA) oder Methacrylat-Alloys.

Um die styrolbasierten Polymere und die Polyolefine aus der ersten leichten Fraktion zu trennen, wird diese einer zweiten Dichtetrennung unterworfen. Die zweite Dichtetrennung wird bei einer Dichte im Bereich von 1,00 bis 1,03 g/cm³, bevorzugt bei einer Dichte im Bereich von 1,00 bis 1,02 g/cm³ und insbesondere bei einer Dichte im Bereich von 1,00 bis 1,01 g/cm³, beispielsweise einer Dichte von 1,00 g/cm³ durchgeführt. In der zweiten Dichtetrennung wird eine zweite schwere Fraktion erhalten, die die styrolbasierten Polymere, insbesondere HIPS und ABS, und gegebenenfalls gefüllte Polyolefine enthält, und eine zweite leichte Fraktion, die ungefüllte Polyolefine, insbesondere PP, enthält.

Sowohl für die erste Dichtetrennung (a) als auch die zweite Dichtetrennung (b) können alle dem Fachmann bekannten Verfahren zur Dichtetrennung eingesetzt werden. So kann die Dichtetrennung zum Beispiel in einem Zyklon oder in einer Schwimm-Sink-Anlage durchgeführt werden. Wenn eine Schwimm-Sink-Anlage eingesetzt wird, so enthält diese eine Flüssigkeit mit der Dichte, bei der das zugeführte Gemisch getrennt werden soll. Die Komponenten, deren Dichte größer ist als die Dichte der Flüssigkeit sinken ab und die Komponenten mit einer Dichte, die kleiner ist als die Dichte der Flüssigkeit schwimmen auf. Als Flüssigkeit kann zum Beispiel Wasser eingesetzt werden, dem zur Einstellung der Dichte eine entsprechende Menge an Salz, insbesondere Natriumchlorid, zugegeben wird.

Bei einer Dichtetrennung in einer Schwimm-Sink-Anlage kann es sinnvoll sein, die Partikel der einzelnen Fraktionen zu trocknen, bevor diese weiteren Aufarbeitungsschritten zugeführt werden. So kann zum Beispiel verhindert werden, dass mitgeschleppte Flüssigkeit mit den feuchten Partikeln die Dichte in der Flüssigkeit einer nachfolgenden Schwimm-Sink-Anlage verändert oder bei anderen Verfahren durch anhaftende Flüssigkeit fehlerhafte Ergebnisse erzielt werden.

Insbesondere bei einer Dichtetrennung in einer Schwimm-Sink-Anlage ist der Trennerfolg unabhängig von der Größe der einzelnen Partikel, die in dem Gemisch aus mindestens zwei Polymeren enthalten sind. Aus diesem Grund kann ein vorhergehender Zerkleinerungsprozess entfallen. Bei der Dichtetrennung in der Schwimm-Sink-Anlage wird die schwere Fraktion am Sumpf der Schwimm-Sink-Anlage entnommen und die leichte Fraktion von der Oberfläche der Flüssigkeit. Hierzu kann zum Beispiel ein Wehr eingesetzt werden, das von der Flüssigkeit überströmt wird, wobei die leichte Fraktion mit der Flüssigkeit über das Wehr strömt und anschließend von der Flüssigkeit getrennt werden kann. Die Flüssigkeit kann dann in die Schwimm-Sink-Anlage zurückgeführt werden.

Auch bei der Entnahme der schweren Fraktion am Sumpf wird in der Regel auch Flüssigkeit mit entnommen, so dass auch die schwere Fraktion zunächst von der Flüssigkeit getrennt werden muss. Auch hier kann die Flüssigkeit dann in die Schwimm-Sink-Anlage zurückgeführt werden.

Zur Abtrennung der schweren beziehungsweise der leichten Fraktion von der Flüssigkeit kann jede dem Fachmann bekannte Vorrichtung zur fest/flüssig-Trennung eingesetzt werden. So kann die Trennung zum Beispiel über einen Filter oder eine Zentrifuge erfolgen. Auch ist eine Abtrennung über Siebe möglich, wobei die Maschenweite der Siebe in diesem Fall kleiner sein muss als die kleinsten im Gemisch enthaltenen Partikel, um ein Aufkonzentrieren der kleinen Partikel in der Flüssigkeit zu verhindern. Alternativ kann zum Verhindern des Aufkonzentrierens von Fremdstoffen oder kleinen Partikeln auch regelmäßig oder kontinuierlich ein Teil der Flüssigkeit aus dem Prozess entnommen und durch frische Flüssigkeit ersetzt werden. Die entnommene Flüssigkeit kann dann entweder gereinigt und entsorgt oder aufgearbeitet und in den Prozess zurückgeführt werden.

Insbesondere bei einer Dichtetrennung mit einem Zyklon ist es vorteilhaft, wenn vor der Durchführung der Dichtetrennung ein Zerkleinerungsschritt durchgeführt wird, mit dem Partikel mit einer mittleren Korngröße von 3 bis 300 mm, mehr bevorzugt von 5 bis 200 mm und insbesondere mit einer Korngröße von 7 bis 150 mm erzeugt werden. Aufgrund möglicher nachfolgender Aufbereitungsschritte ist es jedoch auch dann sinnvoll, einen solchen Zerkleinerungsschritt durchzuführen, wenn die Dichtetrennungen in einer Schwimm-Sink-Anlage durchgeführt werden.

Wenn vor einem nachfolgenden Schritt eine Trocknung durchgeführt werden soll, kann jeder geeignete Trockner eingesetzt werden, wobei es bevorzugt ist, kontinuierlich arbeitende Trockner zu verwenden. Bevorzugt werden zur Trocknung Warmlufttrockner eingesetzt, wobei diese bei Temperaturen betrieben werden, die unterhalb der Glasübergangstemperatur oder Zersetzungstemperatur der einzelnen im zu trennenden Gemisch enthaltenen Komponenten liegt.

Da die in der ersten Dichtetrennung (a) abgetrennte erste schwere Fraktion noch Kunststoffe enthalten kann, insbesondere Polyamide, Polycarbonate, Methacrylat-basierte Polymere, hoch gefüllte Polymere und halogenhaltige Polymere, wird die erste schwere Fraktion einer dritten Dichtetrennung bei einer Dichte im Bereich von 1,18 bis 1,24 g/cm³, mehr bevorzugt bei einer Dichte im Bereich von 1,19 bis 1,24 g/cm³, weiter bevorzugt bei einer Dichte im Bereich von 1,20 bis 1,23 g/cm³ und insbesondere bei einer Dichte im Bereich von 1,21 bis 1,22 g/cm³ zugeführt.

In der dritten Dichtetrennung wird die erste schwere Fraktion in
- eine dritte leichte Fraktion, die Polyamide, Polycarbonate und Methacrylat-basierte Polymere sowie
- eine dritte schwere, Polyoxymethylen, hoch gefüllte Polymere und halogenhaltige Polymere enthaltende Fraktion getrennt.

Die dritte Dichtetrennung kann, wie auch die erste oder zweite Dichtetrennung, in jeder, dem Fachmann bekannten Anlage zur Dichtetrennung, beispielsweise einer Schwimm-Sink-Anlage oder einem Zyklon durchgeführt werden.

Da die erste schwere Fraktion neben den Polymeren mit hoher Dichte auch weitere, anorganische Komponenten enthalten kann, die eine Dichte aufweisen, die oberhalb der Dichte liegt, bei der die erste Dichtetrennung durchgeführt wird, beispielsweise metallhaltige Komponenten, werden die metallhaltigen Komponenten vor der dritten Dichtetrennung entfernt.

Die Entfernung der metallhaltigen Komponenten kann dabei auf jede beliebige, dem Fachmann bekannte Weise erfolgen. So ist es zum Beispiel möglich, die metallhaltigen Komponenten durch eine Dichtetrennung abzutrennen, wobei hier die Dichte so gewählt werden muss, dass die schweren Kunststoffkomponenten, insbesondere stark gefüllte Polymere in der leichten Fraktion verbleiben und nicht mit abgetrennt werden. Weiterhin ist es auch möglich, insbesondere magnetische oder magnetisierbare metallische Komponenten, insbesondere eisenhaltige Komponenten durch eine Magnettrennung von den Kunststoffen abzutrennen.

Um die metallhaltigen Komponenten aus der ersten schweren Fraktion zu entfernen ist es besonders bevorzugt, die erste schwere Fraktion
(i) in eine grobe Fraktion und eine feine Fraktion getrennt wird,
(ii) gegebenenfalls anorganische und metallische Bestandteile aus der groben Fraktion entfernt werden,
(iii) die grobe Fraktion zerkleinert wird,
(iv) anschließend die feine Fraktion und die zerkleinerte grobe Fraktion wieder miteinander zu einer ersten schweren, metallfreien Fraktion vermischt werden, und
(v) die erste schwere, metallfreie Fraktion vom Feinanteil befreit wird.

Insbesondere zur Abtrennung von metallhaltigen Verbundteilen, beispielsweise aus Leiterplatten, werden beispielsweise Wassertische eingesetzt, denen weitere Sortierschritte folgen können. Für eine effiziente Trennung mit einem Wassertisch ist es notwendig, dass die Partikel des zu trennenden Gemischs kleiner sind als der Abstand der Stege des Wassertischs. Aus diesem Grund wird die erste schwere Fraktion zunächst einem Klassifizierer zugeführt und in eine grobe metallhaltige Fraktion und eine feine kunststoff- und holzreiche Fraktion getrennt. Die grobe Fraktion enthält dabei nahezu alle Partikel, deren Korngröße größer ist als die Stegweite der eingesetzten Wassertische. Die Partikel der feinen Fraktion weisen eine Korngröße auf, die kleiner ist als die Stegweite der eingesetzte Wassertische. Die erste schwere, metallfreie Fraktion wird im Klassifizier in einen Aufstrom von Wasser mit Dichte 1 g/cm³ oder einem Gemisch größerer Dichte als 1 g/cm³ mit Salz, Ton oder Eisenpulver zwangsgefördert. Durch die Zwangsförderung werden die Partikel der ersten schweren, metallfreien Fraktion vollständig benetzt, so dass eine effiziente Trennung der Kunststoffpartikel von den Verbundpartikeln erfolgen kann.

Da insbesondere in der groben Fraktion enthaltene Metallteile wie Kugellager, Schrauben oder Nägel oder auch Steine zu einer Beschädigung des Mahlwerks von nachfolgenden Mühlen führen können, ist es bevorzugt, wenn die anorganischen und metallischen Bestandteile aus der groben Fraktion abgetrennt werden, bevor diese zerkleinert wird. Zur Abtrennung der anorganischen Bestandteile aus der groben Fraktion können zum Beispiel Windsichter eingesetzt werden.

Zur Zerkleinerung der groben Fraktion können beliebige, dem Fachmann bekannte Mühlen eingesetzt werden, wobei bevorzugt Schneidmühlen verwendet werden. In der Mühle werden die Partikel der groben Fraktion so zerkleinert, dass diese ebenfalls maximal so groß sind wie die Stegweite der eingesetzten Wassertische und der maximal zulässigen Größe für nachfolgenden Sortieranlagen entsprechen. Hierzu wird bei Einsatz einer Schneidmühle ein Schneidsieb eingesetzt, dessen Maschenweite auf die Stegweite der eingesetzten Wassertische abgestimmt ist, also vorzugsweise der Stegweite der eingesetzten Wassertische entspricht. Die in der Schneidmühle zerkleinerten Partikel, die kleiner sind als die Maschenweite des Schneidsiebs fallen durch dieses hindurch und können aus der Schneidmühle entnommen werden. Partikel die größer sind als die Maschenweite des Schneidsiebs verbleiben in der Mühle und werden weiter zerkleinert.

Auch bei Einsatz anderer Zerkleinerungsvorrichtungen, insbesondere anderer Mühlentypen werden jeweils nur die Partikel entnommen, die kleiner sind als die Stegweite der eingesetzten Waschtische und die übrigen Partikel werden weiter zerkleinert.

Die so zerkleinerte grobe Fraktion kann anschließend wieder mit der feinen Fraktion vermischt werden, wenn die feine Fraktion sehr reich an Metallen, beispielsweise in Form von Kabelstücken und Kupferlitzen, ist, und gemeinsam den nachfolgenden Wassertischen zugeführt werden.

Dieser Stoffstrom, der die im Wesentlichen gefüllte Polycarbonate enthaltenden Verbundpartikel enthält, wird mindestens einem, vorzugsweise zwei seriell arbeitenden Wassertischen zugeführt, in denen eine Trennung in eine Abfallfraktion, eine an Metallen reiche Fraktion und eine Kunststofffraktion aus einer komplexen Zusammensetzung verschiedenster Kunststoffe erfolgt. Insbesondere die hier erhaltene Kunststofffraktion enthält eine große Anzahl an unterschiedlichen Kunststoffen, die für technische Anwendungen sehr relevant sind.

Nach der Abtrennung der metallhaltigen Komponenten wird die so erhaltene erste schwere, metallfreie Fraktion der dritten Dichtetrennung zugeführt, in der die dritte leichte Fraktion und die dritte schwere Fraktion erhalten werden.

Nach Durchführung der ersten Dichtetrennung (a), der zweiten Dichtetrennung (b) und der dritten Dichtetrennung (c) werden alle in den Dichtetrennungen erhaltenen Fraktionen in im wesentlichen sortenreine Polymere enthaltende Fraktionen getrennt. Die Auftrennung in die im wesentlichen sortenreine Polymere enthaltenden Fraktionen kann dabei nach allen dem Fachmann bekannten Verfahren durchgeführt werden.

Um im Wesentlichen sortenreine Kunststoffe zu erhalten, wird die zweite schwere Fraktion vorzugsweise in
- eine im wesentlichen styrolbasierte Polymere enthaltende Fraktion und
- eine im wesentlichen gefüllte Polyolefine enthaltende Fraktion getrennt.

Die Trennung der zweiten schweren Fraktion wird dabei vorzugsweise mittels mindestens einer triboelektrischen Sortierung, mittels mindestens einer spektroskopischen Sortierung oder einer Kombination aus triboelektrischer und spektroskopischer Sortierung durchgeführt.

Bei der triboelektrischen Sortierung werden die einzelnen Kunststoffpartikel durch Reibung elektrostatisch geladen und können aufgrund unterschiedlicher Ladung anschließend in einem Hochspannungsfeld voneinander getrennt werden.

Bei der spektroskopischen Sortierung werden die einzelnen Kunststoffarten üblicherweise durch Nahinfrarot (NIR)-Spektroskopie oder UV-Spektroskopie voneinander getrennt.

Sowohl die triboelektrische Sortierung als auch die spektroskopische Sortierung kann mit dem Fachmann bekannten und am Markt erhältlichen Apparaten zur triboelektrischen Sortierung oder zur spektroskopischen Sortierung durchgeführt werden, wobei spektroskopische Sortieranlagen insbesondere auch auf die Fähigkeit zur Erkennung Carbonblack-gefärbter Kunststoffe ausgelegt sein sollten.

Aus der in der zweiten Dichtetrennung (b) erhaltenen zweiten leichten Fraktion werden vorzugsweise zunächst Leichtstoffe und Abfallstoffe abgetrennt. Bei den Leichtstoffen und Abfallstoffen handelt es sich um Verunreinigungen, die nicht polymerer Art sind, beispielsweise Papier oder andere Fremdstoffe, deren Dichte unterhalb der Dichte der Polymere der zweiten leichten Fraktion liegt. Auf diese Weise wird eine im wesentlichen ungefüllte Polyolefine enthaltende Fraktion erhalten.

Die Abtrennung der Leichtstoffe und Abfallstoffe kann ebenfalls in mindestens einer triboelektrischen Sortierung, mindestens einer spektroskopischen Sortierung oder einer Kombination aus triboelektrischer und spektroskopischer Sortierung durchgeführt werden.

Durch die weitere Sortierung der bei der zweiten Dichtetrennung erhaltenen zweiten schweren Fraktion und zweiten leichten Fraktion werden so als im wesentlichen sortenreine Polymere enthaltende Fraktionen die im wesentlichen styrolbasierte Polymere enthaltende Fraktion, die im wesentlichen gefüllte Polyolefine enthaltende Fraktion und die im wesentlichen ungefüllte Polyolefine enthaltende Fraktion erhalten.

Da die in der dritten Dichtetrennung erhaltene dritte leichte Fraktion mehrere unterschiedliche Kunststoffe enthält, insbesondere Polyamide, Polycarbonate und Methacrylat-basierte Polymere sowie hoch gefüllte Polyolefine, insbesondere Talkum enthaltendes Polypropylen, wird die dritte leichte Fraktion vorzugsweise in
- eine im Wesentlichen hoch gefüllte Polyolefine enthaltende Fraktion,
- eine im wesentlichen Polyamide enthaltende Fraktion,
- eine im wesentlichen Polycarbonat enthaltende Fraktion und
- eine im wesentlichen Methacrylat-basierte Polymere enthaltende Fraktion getrennt, um im wesentlichen sortenreine Polymere enthaltende Fraktionen zu erhalten.

Die Trennung der dritten leichten Fraktion in die im wesentlichen Polyamide enthaltende Fraktion, die im wesentlichen Polycarbonat enthaltende Fraktion und die im wesentlichen Methacrylat-basierte Polymere sowie die im Wesentlichen hoch gefüllte Polyolefine enthaltende Fraktion erfolgt ebenfalls vorzugsweise in mindestens einer triboelektrischen Sortierung, mindestens einer spektroskopischen Sortierung oder einer Kombination aus triboelektrischer Sortierung und spektroskopischer Sortierung.

Um auch die in der dritten Dichtetrennung erhaltene dritte schwere, Polyoxymethylen, hoch gefüllte Polymere und halogenhaltige Polymere enthaltende Fraktion in im wesentlichen sortenreine Polymere enthaltende Fraktionen zu trennen, wird diese vorzugsweise in
- eine Polyoxymethylen enthaltende Fraktion,
- eine gefüllte Polymere enthaltende Fraktion,
- eine bromhaltige Fraktion und
- eine im wesentlichen chlorhaltige Polymere enthaltende Fraktion getrennt.

Auch hier werden die Trennungen der dritten schweren, Polyoxymethylen, hoch gefüllte Polymere und halogenhaltige Polymere enthaltenden Fraktion in die Polyoxymethylen enthaltende Fraktion, die gefüllte Polymere enthaltende Fraktion, die bromhaltige Fraktion und die im Wesentlichen chlorhaltige Polymere enthaltende Fraktion in jeweils mindestens einer triboelektrischen Sortierung, mindestens einer spektroskopischen Sortierung oder Kombinationen aus triboelektrischer und spektroskopischer Sortierung durchgeführt.

Die durch die Trennung der zweiten schweren Fraktion, der dritten leichten Fraktion und der dritten schweren Fraktion mittels mindestens einer triboelektrischen Sortierung, mindestens einer spektroskopischen Sortierung oder Kombinationen aus triboelektrischer und spektroskopischer Sortierung erhaltenen Fraktionen, sowie der aus der zweiten leichten Fraktion nach Abtrennung der Leichtstoffe und Abfallstoffe enthaltenen Fraktion, nämlich
- die im wesentlichen styrolbasierte Polymere enthaltende Fraktion,
- die im wesentlichen gefüllte Polyolefine enthaltende Fraktion,
- die im wesentlichen ungefüllte Polyolefine enthaltende Fraktion,
- die im wesentlichen Polyamide enthaltende Fraktion,
- die im wesentlichen Polycarbonate enthaltende Fraktion,
- die im wesentlichen Methacrylat-basierte Polymere enthaltende Fraktion,
- die Polyoxymethylen enthaltende Fraktion,
- die gefüllte Polymere enthaltende Fraktion,
- die bromhaltige Fraktion und
- die im wesentlichen chlorhaltige Polymere enthaltende Fraktion
   werden auch als "im wesentlichen sortenreine Polymere enthaltende Fraktion" bezeichnet, wenn mehrere dieser Fraktionen oder alle dieser Fraktionen gemeint sind.

Neben den jeweils in überwiegendem Anteil enthaltenen Polymeren in den im wesentlichen sortenreine Polymere enthaltenden Fraktionen können auch noch Elastomere enthalten sein, die in einem oder mehreren nachfolgenden Aufbereitungsschritten aus den im wesentlichen sortenreine Polymere enthaltenden Fraktionen abgetrennt werden. Die Abtrennung der thermoplastischen Elastomere kann dabei mit einem dem Fachmann bekannten Elastomerabscheider erfolgen und wird vor nachfolgenden Prozessschritten, zum Beispiel einer Extrusion, durchgeführt.

Zur Herstellung von Granulaten oder anderen Halbzeugen werden die im wesentlichen sortenreine Polymere enthaltenden Fraktionen vorzugsweise extrudiert. Um feste Verunreinigungen wie Duromere aber auch stark vernetzte und nicht thermoplastische Elastomere, die in den im wesentlichen sortenreine Polymere enthaltenden Fraktionen noch enthalten sein können und durch die vorhergehenden Trennschritte mitgeschleppt wurden, zu entfernen, kann zum Beispiel eine Schmelzefiltration eingesetzt werden. Nach der Schmelzefiltration, in der die unerwünschten Komponenten, nämlich die festen oder elastischen Komponenten abgetrennt wurden, wird die erhaltene Kunststoffschmelze zum gewünschten Granulat oder Halbzeug extrudiert.

Da die im wesentlichen sortenreine Polymere enthaltenden Fraktionen neben festen und elastischen Komponenten auch noch Komponenten enthalten können, die flüchtig sind oder die sich zu flüchtigen Komponenten zersetzen können, ist es weiterhin bevorzugt, wenn diese flüchtigen Komponenten oder sich zu flüchtigen Komponenten zersetzenden Komponenten in der Extrusion bei Unterdruck durch eine oder mehrere Vakuumentgasungen abgetrennt werden. Kennzeichnend für diese Vakuumentgasungen ist ein Druck von weniger als 100 mbar(abs), vorzugsweise weniger 50 mbar(abs) und für besondere Abtrennaufgaben ein Druck von weniger als 10 mbar(abs) und für ganz besondere Abtrennaufgaben ein Druck von weniger als 1 mbar (abs). Stoffe die sich auf diese Art bis zur Nachweisgrenze reduzieren lassen sind insbesondere Phthalate und bromierte Flammhemmer. Vakuumentgasungen bei einem Druck von weniger als 100 mbar sind für die Trocknung der Schmelze im Extruder geeignet. Für den Umgang mit einem auf diese Weise erzeugten Vakuumkondensat sind entsprechend chemisch resistente, automatisierte Abfüll- und Transportvorrichtungen für dessen Handhabung vorzusehen.

Durch die Abtrennung der flüchtigen Komponenten, der sich zu flüchtigen Komponenten zersetzenden Komponenten, der festen Komponenten und der elastischen Komponenten werden bei der Extrusion Polymere erhalten, die im Wesentlichen frei von unerwünschten Komponenten sind. Daher können die so gewonnenen Polymere auch für hochwertige Produkte eingesetzt werden, so dass nicht nur ein Downcycling möglich ist, sondern ein Kreislaufprozess, in dem die Polymere für Produkte eingesetzt werden, die denen entsprechen, für die die ursprünglichen fabrikfrischen Polymere genutzt wurden.

Da die einzelnen Kunststoffe in den verschiedenen, im wesentlichen sortenreine Polymere enthaltenden Fraktionen eingefärbt sein können, ist es insbesondere für einen Kreislaufprozess, bei dem die Polymere für die Herstellung hochwertiger Produkte eingesetzt werden, erforderlich, vor einer Weiterverarbeitung zu Granulat die jeweiligen im wesentlichen sortenreine Polymere enthaltenden Fraktionen in Fraktionen unterschiedlicher Farben zu trennen. Wenn die Polymere für helle oder schwarze Produkte genutzt werden, reicht es aus, eine Trennung nach "hell" und "dunkel" durchzuführen. Bei einem Einsatz für farbige Produkte ist es notwendig, nach unterschiedlichen Farben zu sortieren. Die Sortierung kann dabei in handelsüblichen Farbsortierern durchgeführt werden.

Ein Ausführungsbeispiel der Erfindung ist in den Figuren dargestellt und wird in der nachfolgenden Beschreibung näher erläutert.

Es zeigen:
- Figur 1: einen ersten Strang des erfindungsgemäßen Verfahrens;
- Figur 2: einen zweiten Strang des erfindungsgemäßen Verfahrens;
- Figur 3: eine alternative Sortierung im zweiten Strang des erfindungsgemäßen Verfahrens.

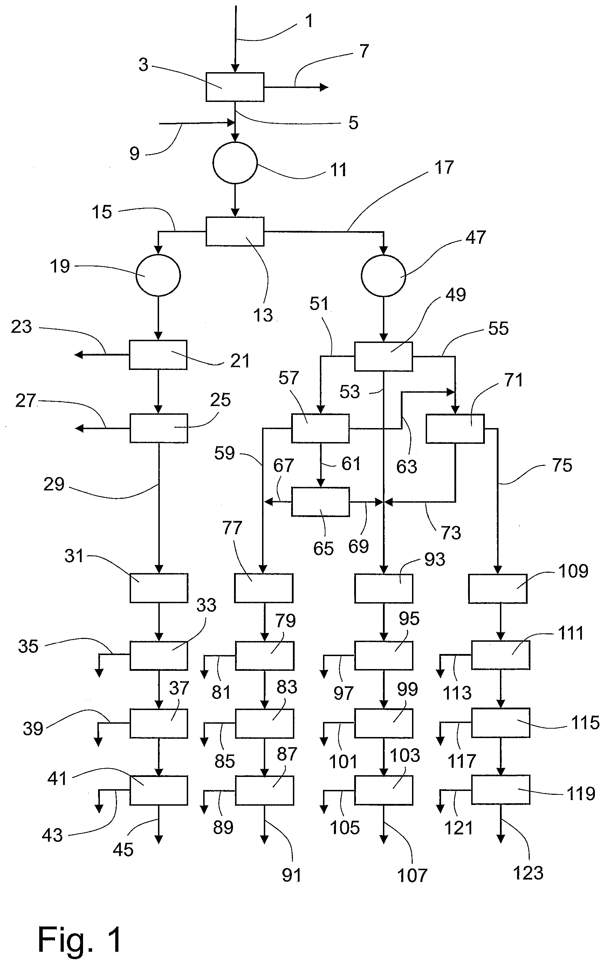

Figur 1 zeigt einen ersten Strang des erfindungsgemäßen Verfahrens zur Rückgewinnung von Kunststoffen.

Zur Rückgewinnung von Kunststoffen wird eine Abfallfraktion 1 einer ersten Dichtetrennung 3 zugeführt. Die Abfallfraktion 1 ist in der Regel eine durch einen Abfallerstbehandler und Metallreycler vorbehandelte WEEE (Waste of Electrical and Electronical Equipment)-Abfallfraktion, die mehrheitlich Stoffe einer Dichte von mehr als 1,4 g/cm³ enthält. Die Partikel der Abfallfraktion 1 können jede beliebige Größe aufweisen, bevorzugt ist es jedoch, wenn die Abfallfraktion 1 eine Korngröße im Bereich von 3 bis 300 mm, mehr bevorzugt von 5 bis 200 mm und insbesondere von 7 bis 150 mm aufweist.

Die Dichtetrennung 3 erfolgt bei einer Dichte im Bereich von 1,14 bis 1,18 g/cm³, bevorzugt bei einer Dichte im Bereich von 1,14 bis 1,17 g/cm³ und insbesondere bei einer Dichte im Bereich von 1,15 bis 1,16 g/cm³ und kann zum Beispiel in einer Schwimm-Sink-Anlage oder einem Zyklon durchgeführt werden. Bei der Dichtetrennung werden eine erste leichte Fraktion 5, die Polyolefine und styrolbasierte Polymere enthält, und eine erste schwere Fraktion 7 erhalten.

Überraschenderweise hat sich gezeigt, dass durch die Erhöhung der Dichte für die erste Dichtetrennung 3 gegenüber der nach dem Stand der Technik üblichen Dichte für die Dichtetrennung eine deutliche Erhöhung des Gehalts an styrolbasierten Polymeren, insbesondere ABS und PS in der ersten leichten Fraktion 5 erreicht wird. Dies ist beispielhaft für verschiedene Dichten in Tabelle 1 dargestellt. Durch die Erhöhung der Dichte, bei der die Trennung in der ersten Dichtetrennung 3 durchgeführt wird, kann so die Ausbeute an styrolbasierten Polymeren nahezu verdoppelt werden.

**Tabelle 1: Ausbeute an ABS und PS bei Erhöhung der Dichteschnitte**

| Dichte (g/cm³) | Ausbeute ABS und PS (%) |
|---|---|
| 1,08 | 23,2 |
| 1,10 | 30,4 |
| 1,15 | 41,3 |

Nach der ersten Dichtetrennung 3 kann der ersten leichten Fraktion 5 noch eine leichte Abfallfraktion 9 mit einer Dichte von weniger als 1,15 g/cm³ zugemischt werden. Bei der leichten Abfallfraktion 9 handelt es sich vorzugsweise ebenfalls um WEEE-Abfälle.

Insbesondere, wenn die erste Dichtetrennung 3 in einer Schwimm-Sink-Anlage durchgeführt wird, ist es bevorzugt, wenn die erste leichte Fraktion 5 in einem Trocknungsschritt 11 getrocknet wird, bevor diese einer zweiten Dichtetrennung 13 zugeführt wird. Durch das Trocknen wird verhindert, dass größere Mengen an Flüssigkeit mit höherer Dichte in die zweite Dichtetrennung 13 eingebracht werden und, wenn die zweite Dichtetrennung 13 ebenfalls in einer Schwimm-Sink-Anlage durchgeführt wird, dadurch die Dichte der Flüssigkeit in der zweiten Dichtetrennung 13 unzulässig erhöht wird. Wenn die zweite Dichtetrennung 13 in einem Zyklon durchgeführt wird, kann die anhaftende Flüssigkeit der ersten Dichtetrennung 3 zu einer Erhöhung der Dichte des Partikels führen, so dass dieses in der zweiten Dichtetrennung 13 fehlerhaft abgetrennt wird. Aus diesem Grund wird die erste leichte Fraktion unabhängig von der Art der zweiten Dichtetrennung 13 vorzugsweise im Trocknungsschritt 11 getrocknet, wenn die erste Dichtetrennung 3 in einer Schwimm-Sink-Anlage durchgeführt wurde.

Die zweite Dichtetrennung 13 kann, wie die erste Dichtetrennung auch, in einer Schwimm-Sink-Anlage oder einem Zyklon durchgeführt werden, wobei die erste leichte Fraktion 5 in der zweiten Dichtetrennung 13 bei einer Dichte im Bereich von 1,00 bis 1,03 g/cm³, mehr bevorzugt bei einer Dichte im Bereich von 1,00 bis 1,02 g/cm³ und insbesondere bei einer Dichte im Bereich von 1,00 bis 1,01 g/cm³ in eine zweite leichte Fraktion 15 und eine zweite schwere Fraktion 17 getrennt wird. Die zweite leichte Fraktion enthält dabei vorwiegend ungefüllte Polyolefine, insbesondere Polypropylen, und die zweite schwere Fraktion enthält insbesondere styrolbasierte Polymere wie HIPS und ABS sowie gegebenenfalls gefüllte Polyolefine, insbesondere gefülltes Polypropylen.

Zur weiteren Auftrennung in im wesentlichen sortenreine Polymere enthaltende Fraktionen kann die zweite leichte Fraktion 15 in einem zweiten Trocknungsschritt 19 getrocknet werden. Nach dem zweiten Trocknungsschritt 19 wird die zweite leichte Fraktion 15 einer ersten Sortierung 21 zugeführt, in der Abfallstoffe 23 aus der zweiten leichten Fraktion 15 abgetrennt werden. Bei den in der ersten Sortierung abgetrennten Abfallstoffen 23 handelt es sich insbesondere um elektrostatische Störstoffe, insbesondere Holz.

Aus der von Abfallstoffen befreiten zweiten leichten Fraktion werden dann in einer zweiten Sortierung 25 Leichtstoffe 27 abgetrennt, so dass eine im wesentlichen ungefüllte Polyolefine enthaltende Fraktion 29 erhalten wird. Die abgetrennten Leichtstoffe 27 sind insbesondere Folien, Flusen und Schäume.

Die erste Sortierung 21 zur Abtrennung der Abfallstoffe 23 und die zweite Sortierung 25 zur Abtrennung der Leichtstoffe 27 können unabhängig voneinander jeweils mindestens eine triboelektrische Sortierung, mindestens eine spektroskopische Sortierung oder eine Kombination aus triboelektrischer Sortierung und spektroskopischer Sortierung sein. Bevorzugt sind sowohl die erste Sortierung 21 als auch die zweite Sortierung 25 jeweils triboelektrische Sortierungen.

Die im wesentlichen ungefüllte Polyolefine enthaltende Fraktion 29 kann dann einer Farbsortierung 31 zugeführt werden, in der die in der im wesentlichen ungefüllte Polyolefine enthaltenden Fraktion 29 enthaltenen Polyolefinpartikel nach ihrer Farbe sortiert werden. Unabhängig davon, ob die Farbsortierung 31 durchgeführt wird oder nicht, werden aus der im wesentlichen ungefüllte Polyolefine enthaltenden Fraktion 29 in einer Elastomerabtrennung 33 gegebenenfalls enthaltene Elastomere 35 abgetrennt und aus dem Verfahren entnommen. Nach der Abtrennung der Elastomere wird die im wesentlichen ungefüllte Polyolefine enthaltende Fraktion einem Extruder 37 zugeführt, der bevorzugt mindestens eine Entgasungszone aufweist, um flüchtige Komponenten 39 oder Komponenten, die sich zu flüchtigen Substanzen zersetzen, aus der im wesentlichen ungefüllte Polyolefine enthaltenden Fraktion 29 zu entfernen. Die den Extruder 37 verlassende Schmelze wird dann vorzugsweise einer Schmelzefiltration 41 zugeführt, in der gegebenenfalls noch enthaltene Feststoffe 43 aus der im wesentlichen ungefüllten Polyolefine enthaltenden Fraktion abgetrennt werden. Die von Verunreinigungen gereinigte Schmelze 45 kann dann einem Compoundierschritt zugeführt und zu Halbzeugen, bevorzugt zu Granulat, verarbeitet und nachfolgend in Herstellprozessen für Kunststoffprodukte aus Polyolefinen eingesetzt werden.

Die in der zweiten Dichtetrennung 13 erhaltene zweite schwere Fraktion 17, die insbesondere styrolbasierte Polymere wie HIPS und ABS sowie gegebenenfalls gefüllte Polyolefine, insbesondere gefülltes Polypropylen, enthält, wird ebenfalls vorzugsweise in einem dritten Trocknungsschritt 47 getrocknet.

In einem dritten Sortierschritt 49 wird die zweite schwere Fraktion in eine styrolbasierte Fraktion 51, die insbesondere ABS und PS enthält, eine HIPS enthaltende Fraktion 53 und eine im Wesentlichen gefüllte Polyolefine enthaltende Fraktion 55 getrennt.

Die styrolbasierte Fraktion 51 wird in einem vierten Sortierschritt 57 in eine im Wesentlichen ABS enthaltende Fraktion 59, eine ABS und HIPS enthaltende Fraktion 61 sowie eine gefüllte Polyolefine enthaltende Fraktion 63 getrennt. Die ABS und HIPS enthaltende Fraktion wird einem fünften Sortierschritt 65 zugeführt, in dem die ABS und HIPS enthaltende Fraktion in eine im Wesentlichen ABS enthaltende Fraktion 67 und eine im Wesentlichen HIPS enthaltende Fraktion 69 getrennt wird.

Die gefüllte Polyolefine enthaltende Fraktion 63 wird aufgrund der in der Regel geringen Menge vorzugsweise zunächst gesammelt bis ein anlagentypischer Durchsatz von beispielsweise 1 t/h sinnvoll aufrechterhalten werden kann, bevor diese zusammen mit der im wesentlichen gefüllte Polyolefine enthaltenden Fraktion 55 einem sechsten Sortierschritt 71 zugeführt wird, in dem noch enthaltenes HIPS abgetrennt wird, so dass eine HIPS enthaltende Fraktion 73 und eine im wesentlichen sortenreines gefülltes Polyolefin, insbesondere Talkum-gefülltes Polypropylen, enthaltende Fraktion 75 erhalten werden.

Der dritte Sortierschritt 49, der vierte Sortierschritt 57, der fünfte Sortierschritt 65 und der sechste Sortierschritt 71 können jeweils unabhängig voneinander mindestens eine triboelektrische Sortierung, eine spektroskopische Sortierung oder eine Kombination aus tribolektrischer Sortierung und spektroskopischer Sortierung sein. Bevorzugt sind der dritte Sortierschritt 49 und der vierte Sortierschritt 57 jeweils triboelektrische Sortierungen und der fünfte Sortierschritt 65 und der sechste Sortierschritt 71 jeweils spektroskopische Sortierungen, beispielsweise auf Nahinfrarot-Spektroskopie oder auf XRF-Spektroskopie oder auf UV-Spektroskopie basierende Sortierung. Bei der spektroskopischen Sortierung wird insbesondere bei hellen Mischungen ein auf NIR-Spektroskopie basierender Sorter eingesetzt und bei grauen oder dunklen Mischungen ein auf UV-Spektroskopie basierender Sorter. XRF-Sorter eignen sich vorzugsweise für Kunststoffe die nach Metallgehalten getrennt werden (Aluminium, Magnesium, Silizium).

Zur weiteren Aufbereitung werden die im Wesentlichen ABS enthaltende Faktion 59 und die ABS enthaltende Fraktion 67 einer Farbsortierung 77 zugeführt. Aus den nach Farben sortierten im Wesentlichen ABS enthaltenden Fraktionen können dann in einer Elastomerabtrennung 79 gegebenenfalls enthaltene Elastomere 81 abgetrennt und aus dem Verfahren entnommen werden. Nach der Abtrennung der Elastomere wird die im wesentlichen ABS enthaltende Fraktion einem Extruder 83 zugeführt, der mindestens eine Entgasungszone zur Entfernung von flüchtigen Komponenten 85 oder sich zu flüchtigen Substanzen zersetzenden Komponenten aufweist. Aus der im Extruder 83 erzeugten ABS-Schmelze können dann in einer Schmelzefiltration 87 feste Verunreinigungen 89 entfernt werden. Die von Verunreinigungen gereinigte Schmelze 91 kann dann einem Compoundierschritt zugeführt und zu Halbzeugen, bevorzugt zu Granulat, verarbeitet und nachfolgend in Verfahren zur Herstellung von Kunststoffprodukten aus ABS eingesetzt werden.

Auch die im dritten Sortierschritt 49, fünften Sortierschritt 65 und sechsten Sortierschritt 71 abgetrennten HIPS enthaltenden Fraktionen 53, 69, 73 werden zusammengeführt und einer Farbsortierung 93 zugeführt, in der die HIPS enthaltenden Fraktionen nach Farben sortiert werden. Aus den sortierten HIPS enthaltenden Fraktionen können dann in einer Elastomerabtrennung 95 Elastomere 97 abgetrennt und entnommen werden. Anschließend wird die HIPS enthaltende Fraktion in einem Extruder 99 geschmolzen, wobei der Extruder auch hier vorzugsweise eine Entgasungszone aufweist, in der flüchtige Komponenten 101 und Komponenten, die sich zu flüchtigen Komponenten zersetzen, entnommen werden können. Die so erzeugte HIPS enthaltende Schmelze wird einer Schmelzefiltration 103 zugeführt, in der noch enthaltene feste Komponenten 105 abgetrennt werden können. Aus der gereinigten HIPS-Schmelze 107 kann dann einem Compoundierschritt zugeführt und zu Halbzeugen, bevorzugt zu Granulat, verarbeitet und nachfolgend zur Herstellung von Kunststoffteilen aus HIPS eingesetzt werden.

Die im sechsten Sortierschritt 71 erhaltene gefülltes Polyolefin enthaltende Fraktion 75 wird ebenfalls vorzugsweise einer Farbsortierung 109 zugeführt. Aus den dort erhaltenen nach Farben sortierten Fraktionen können dann in einer Elastomerabtrennung 111 noch enthaltene Elastomere 113 abgetrennt werden. Die von Elastomeren befreite Fraktion wird dann in einem Extruder 115 geschmolzen, wobei in einer Entgasungszone flüchtige Komponenten 117 und sich zu flüchtigen Substanzen zersetzende Komponenten entfernt werden können. Die im Extruder 115 erzeugte Schmelze kann in einer Schmelzefiltration 119 von festen Verunreinigungen 121 gereinigt werden. Anschließend kann die gefüllte Polyolefine enthaltende Schmelze 123 einem Compoundierschritt zugeführt und zu Halbzeugen, bevorzugt zu Granulat, verarbeitet und nachfolgend zur Herstellung von Kunststoffteilen aus gefülltem Polyolefin, insbesondere aus talkumgefülltem Polypropylen, eingesetzt werden.

Grundsätzlich gilt für alle Aufbereitungswege das "Prinzip der Schnittmengen". Dies bedeutet, dass jede Trenn- und Sortiertechnologie eine Teilmenge abdeckt, die in der Grundmenge vorzufinden ist. Die einzelnen Sortiervorgänge sind jeweils dann am effizientesten und weisen die geringsten Verluste auf, wenn sich die sortierbaren Teilmengen überlappen. Wenn sich die Teilmengen nicht überlappen, weist der spezifische Sortierprozess Lücken auf und eine spezifische Teilmenge wird nicht generiert und geht verloren. Idealerweise umfasst der Trennprozess deshalb eine Abfolge physikalisch verschiedener Sortiertechniken, wie beispielsweise vorstehend beschrieben und in Figur 1 dargestellt, zunächst eine Dichtetrennung, dann eine triboelektrische Sortierung und danach eine spektroskopische Sortierung. Abhängig von der Zusammensetzung des zu trennenden Gemischs kann jedoch auch jede andere Kombination der drei Sortierprozesse zielführend sein.

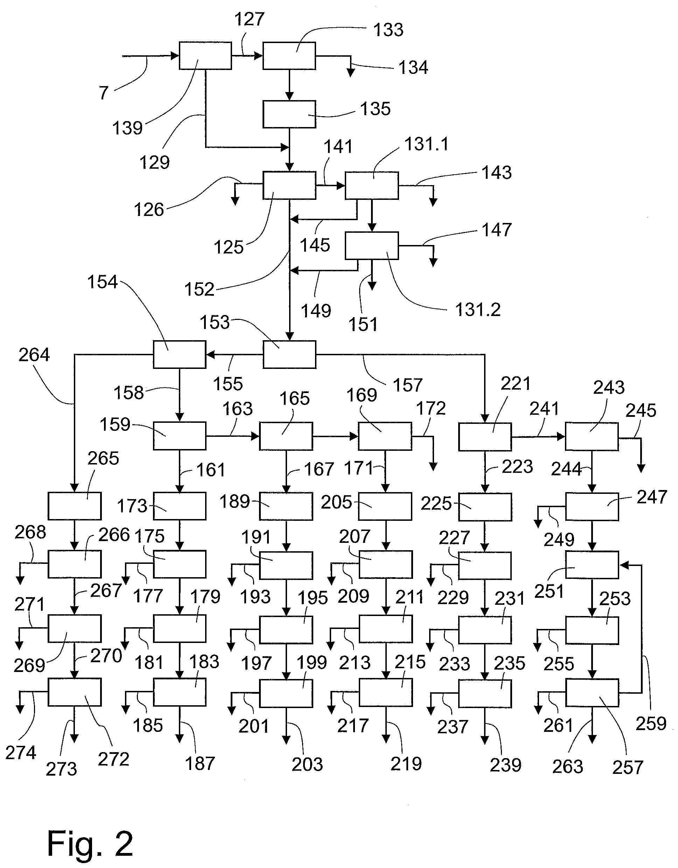

Figur 2 zeigt einen zweiten Strang des erfindungsgemäßen Verfahrens, in dem die erste schwere Fraktion 7, die bei der ersten Dichtetrennung 3 erhalten wird, weiter aufgearbeitet wird.

Hierzu wird die erste schwere Fraktion 7 einem Klassierer 139 zugeführt, in dem die in der ersten schweren, metallfreien Fraktion enthaltenen Kunststoffe von ebenfalls enthaltenen Leiterplattenpartikeln, die im Wesentlichen aus glasfasergefülltem Polycarbonat aufgebaut sind, getrennt werden. Die Trennung erfolgt dabei vorzugsweise in einem Aufstrom von Wasser oder einem wässrigen Medium mit Salz, Ton oder Eisenstaub, wobei bei diesem Verfahren die Fraktion 7 mittels Zwangsförderung gegen den Aufstrom eingebracht wird, so dass die in der ersten schweren Fraktion 7 enthaltenen Partikel luftfrei und vollständig benetzt werden. Hierdurch können die Leiterplattenpartikel effizient aus der ersten schweren Fraktion 7 entfernt werden. Durch den Aufstrom erfolgt eine Trennung in eine grobe Fraktion 127 und eine feine Fraktion 129. Die feine Fraktion 129 entspricht in der Regel der Stegweite der nachfolgenden Wassertische 131.1, 131.2. Übliche Stegbreiten von Wassertischen sind zum Beispiel 10 mm oder 20 mm.

Um die grobe Fraktion 127 aufarbeiten zu können, ist es notwendig, die einzelnen Partikel auf eine Größe zu zerkleinern, bei der diese mittels der Wassertische 131.1, 131.2 weiter sortiert werden können. Hierzu wird die grobe Fraktion zunächst einem Windsichter 133 zugeführt, in dem anorganische und insbesondere metallische Bestandteile 134 aus der groben Fraktion 127 entfernt werden, die eine nachfolgende Mühle 135, insbesondere die Schneiden der Mühle 135 beschädigen können. Bei den anorganischen und metallischen Bestandteilen 134, die die Schneiden der Mühle 135 beschädigen können, handelt es sich insbesondere um Schrauben, Nägel, Steine, Kugellager, etc. Da diese alle eine wesentlich höhere Dichte aufweisen als die aufzubereitenden Kunststoffteile oder Platinenteile, ist die Abtrennung im Windsichter 133 ausreichend effektiv. Nach dem Abtrennen der Teile, die die Mühle beschädigen können, wird die grobe Fraktion in die Mühle 135 eingebracht und die einzelnen Partikel der groben Fraktion werden so zerkleinert, dass eine weitere Sortierung mittels der nachfolgenden Wassertische 131.1, 131.2 möglich ist. Um zu verhindern, dass den Wassertischen Partikel aus der groben Fraktion zugeführt werden, die noch nicht ausreichend klein sind, weist die Mühle 135 vorzugsweise ein Schneidsieb auf, durch das die ausreichend zerkleinerten Partikel entnommen werden. Die noch nicht ausreichend zerkleinerten Partikel verbleiben im Mahlvorgang. Auf diese Weise wird die grobe Fraktion in der Mühle in Partikel zerkleinert, deren Größe der Anforderung an die maximale zulässige Teilchengröße der Folgeprozesse entspricht.

Wenn die Mühle ein Schneidsieb aufweist, so dass nur die hinreichend zerkleinerten Partikel die Mühle verlassen, werden die zerkleinerten Partikel der groben Fraktion, die die Mühle verlassen haben mit der feinen Fraktion 129 vermischt und in einem Sieb 125 von ihrem Feinanteil 126 befreit. Die Maschenweite des eingesetzten Siebes 125 beträgt vorzugsweise 4 mm.

Auf diese Weise entsteht eine zumeist an Leiterplattenpartikeln und Kabelresten reiche Fraktion 141, die den zwei seriell arbeitenden Wassertischen 131.1, 131.2 zugeführt wird, oder eine Fraktion 152, die für eine Aufbereitung mit den Wassertischen zu arm an Metallen ist. Einfach ist diese Unterscheidung, ob es sich um eine Fraktion 141 oder 152 handelt, mit einem manuellen oder automatisierten XRF-Analysengerät zu treffen. Mittels des ersten Wassertischs 131.1 werden eine metallreiche Fraktion 143 und eine im Wesentlichen Kunststoffe enthaltende Fraktion 145 abgetrennt. Die verbleibende Fraktion wird dem zweiten Wassertisch 131.2 zugeführt, auf dem ebenfalls eine metallreiche Fraktion 147 und eine im Wesentlichen Kunststoffe enthaltende Fraktion 149 abgetrennt werden. Neben der metallreichen Fraktion 147 und der im Wesentlichen Kunststoffe enthaltenden Fraktion 149 verbleibt unter Umständen noch eine Abfallfraktion 151. Sowohl die metallreichen Fraktionen 143, 147 als auch die Abfallfraktion 151 enthalten in der Regel noch Wertstoffe, so dass diese weiteren Aufarbeitungsverfahren zugeführt werden können. Bevorzugt wird die Abfallfraktion 151 analysiert, um zu bewerten, ob diese in der Qualität der Fraktion 152 entspricht. Ist dies der Fall, wird die Abfallfraktion 151 wie die Fraktion 152 weiterbehandelt.

Die im Wesentlichen Kunststoffe enthaltenden Fraktionen 145, 149, 152 enthalten in der Regel eine hochkomplexe Zusammensetzung verschiedenster Kunststoffe, die insbesondere für technische Anwendungen relevant sind. Aus diesem Grund ist es besonders bevorzugt, wenn, wie hier dargestellt, die im Wesentlichen Kunststoffe enthaltenden Fraktionen 145, 149, 152 vermischt und weiter aufbereitet werden.

Zur weiteren Aufarbeitung und Auftrennung der im Wesentlichen Kunststoffe enthaltenden Fraktionen 145, 149, 152 werden diese entweder separat oder, wie hier dargestellt, miteinander vermischt, einer dritten Dichtetrennung 153 zugeführt. Die dritte Dichtetrennung 153 wird bei einer Dichte im Bereich von 1,18 bis 1,24 g/cm³, mehr bevorzugt bei einer Dichte im Bereich von 1,19 bis 1,24 g/cm, weiter bevorzugt bei einer Dichte im Bereich von 1,20 bis 1,23 g/cm³ und insbesondere bei einer Dichte im Bereich von 1,21 bis 1,22 g/cm³ durchgeführt. Wie die erste Dichtetrennung 3 oder die zweite Dichtetrennung 13 kann auch die dritte Dichtetrennung 153 in einer Schwimm-Sink-Anlage oder einem Zyklon durchgeführt werden. Durch die dritte Dichtetrennung 153 bei einer Dichte von weniger als 1,25 g/cm³ kann verhindert werden, dass höher glasfasergefüllte Polycarbonate oder ABS-Typen in die mit dem erfindungsgemäßen Verfahren gewonnenen im Wesentlichen sortenreinen Polymere gelangen, wodurch die mechanischen und optischen Eigenschaften der entsprechenden Granulate gemindert werden. Wenn die Dichte unterhalb von 1,22 g/cm³ liegt, kann weiterhin eine Verschleppung von Polyoxymethylen verhindert werden, die eine Weiterverarbeitung der Polymere mit einem Extruder oder einer Spritzgießmaschine aufgrund von gesundheitsgefährdenden Grenzwertüberschreitungen unmöglich machen würden.

In der dritten Dichtetrennung 153 werden die im Wesentlichen Kunststoffe enthaltenden Fraktionen 145, 149 sowie die die Kunststoffe enthaltende Fraktion 152 in eine dritte leichte Fraktion 155 und eine dritte schwere Fraktion 157 getrennt. Die dritte leichte Fraktion 155 enthält dabei Polyamide, Polycarbonate und Methacrylat-basierte Polymere und die dritte schwere Fraktion 157 enthält Polyoxymethylen, hoch gefüllte Polymere und halogenhaltige Polymere. Die halogenhaltigen Polymere umfassen insbesondere Polyvinylchlorid (PVC) sowie Kunststoffe mit bromierten Flammhemmern. Die hochgefüllten Polymere enthalten zum Beispiel Fasern, insbesondere Glasfasern oder Kreide.

Die in der dritten Dichtetrennung 153 erhaltene dritte leichte Fraktion 155 wird zur weiteren Auftrennung in im Wesentlichen sortenreine Polymere einer XRF-sprektroskopischen Abtrennung 154 zugeführt, bei der eine im Wesentlichen hochgefüllte Polyolefine enthaltende Fraktion 264 und eine Polyamide, Polycarbonate und Methacrylat-basierte Polymere enthaltende Fraktion 158 erzeugt wird. Die im Wesentlichen hochgefüllte Polyolefine enthaltende Fraktion 264 enthält zum Beispiel mit 10 bis 50% Talkum gefüllte Polyolefine.

Die im Wesentlichen hochgefüllte Polyolefine enthaltende Fraktion 264 wird vorzugsweise, wie vorstehend bereits für die Polyolefine, die styrolbasierten Polymere und die gefüllten Polyolefine enthaltenden Fraktionen beschrieben, einer Farbsortierung 265 zugeführt. Aus den dort nach Farben sortierten Fraktionen können dann in einer Elastomerabtrennung 266 noch enthaltene PUR-Elastomere 268 aus der im Wesentlichen Polycarbonate enthaltenden Fraktion abgetrennt werden. Die von PUR-Elastomeren befreite Fraktion 267 wird dann in einem Extruder 269 geschmolzen, wobei in einer Entgasungszone flüchtige Komponenten 271 und sich zu flüchtigen Substanzen zersetzende Komponenten entfernt werden können. Die im Extruder 269 erzeugte Schmelze 270 kann in einer Schmelzefiltration 272 von festen Verunreinigungen 274 gereinigt werden. Anschließend wird die Talkum enthaltende Schmelze 273 ebenfalls vorzugsweise zu Halbzeugen, wie einem Granulat verarbeitet, das dann in Prozessen zur Herstellung von Kunststoffteilen aus mit Talkum und/oder Kreide gefülltem Polypropylen eingesetzt werden kann.

Die Polyamide, Polycarbonate und Methacrylat-basierte Polymere enthaltende Fraktion 158 wird einer spektroskopischen Sortierung 159 zugeführt, in der im Wesentlichen Polycarbonate 161 abgetrennt werden. Die spektroskopische Sortierung 159 wird dabei vorzugsweise im farbunabhängigen UV-Spektrum durchgeführt. Um bei der spektroskopischen Sortierung 159 schwere Bestandteile, insbesondere POM-enthaltende Partikel mit Hilfe von Luftstößen abtrennen zu können, ist es weiterhin bevorzugt, dass die zu sortierenden Partikel eine Korngröße von weniger als 20 mm aufweisen.

Die im wesentlichen Polycarbonate enthaltende Fraktion 161 wird vorzugsweise, wie vorstehend bereits für die Polyolefine, die styrolbasierten Polymere und die gefüllten Polyolefine enthaltenden Fraktionen beschrieben, einer Farbsortierung 173 zugeführt. Aus den dort nach Farben sortierten Fraktionen können dann in einer Elastomerabtrennung 175 noch enthaltene Elastomere 177 aus der im Wesentlichen Polycarbonate enthaltenden Fraktion abgetrennt werden. Die von Elastomeren befreite Fraktion wird dann in einem Extruder 179 geschmolzen, wobei in einer Entgasungszone flüchtige Komponenten 181 und sich zu flüchtigen Substanzen zersetzende Komponenten entfernt werden können. Die im Extruder 179 erzeugte Schmelze kann in einer Schmelzefiltration 183 von festen Verunreinigungen 185 gereinigt werden. Anschließend wird im Wesentlichen Polycarbonate enthaltende Schmelze 187 ebenfalls vorzugsweise zu Halbzeugen, wie einem Granulat verarbeitet, das dann in Prozessen zur Herstellung von Kunststoffteilen aus Polycarbonat eingesetzt werden kann.

In der spektroskopischen Sortierung 159 entsteht neben der im Wesentlichen Polycarbonate enthaltenden Fraktion 161 eine im Wesentlichen Polyamide und Methacrylat-basierte Polymere, beispielsweise Polymethylmethacrylat (PMMA), enthaltende Fraktion 163. Die im Wesentlichen Polyamide und Methacrylat-basierte Polymere enthaltende Fraktion 163 wird einer weiteren spektroskopischen Sortierung 165 zugeführt, in der eine Methacrylat-basierte Polymere enthaltende Fraktion 167 abgetrennt wird. Die verbleibende Fraktion enthält insbesondere Polymere und Fremdkunststoffe. Diese verbleibende Fraktion wird ebenfalls einer spektroskopischen Sortierung 169 zugeführt, in der eine Polyamide enthaltende Fraktion 171 und eine Restfraktion 172 erhalten werden. Die Restfraktion 172 lässt sich in der Regel nicht wirtschaftlich wiederverwerten und wird daher vorzugsweise einer thermischen Verwertung zugeführt.

Zur weiteren Aufarbeitung wird die im Wesentlichen Methacrylat-basierte Polymere enthaltende Fraktion einer Farbsortierung 189 zugeführt, in der insbesondere auf Transparenz sortiert wird. Die sortierten Fraktionen können dann einer Elastomerabtrennung 191 zugeführt werden, um noch enthaltene Elastomere 193 zu entfernen. Die von Elastomeren befreite Fraktion kann dann in einem Extruder 195 geschmolzen werden, wobei der Extruder 195 auch hier vorzugsweise eine Entgasungszone aufweist, in der flüchtige Komponenten 197 oder sich zu flüchtigen Substanzen zersetzende Komponenten entfernt werden können. Mit Hilfe einer Schmelzefiltration 199 können feste Verunreinigungen 201 entfernt werden und die so gereinigte Schmelze 203 kann zu Halbzeugen, beispielsweise einem Granulat, verarbeitet werden, das zur Herstellung von Kunststoffteilen aus Methacyrlat-basierten Polymeren, insbesondere aus Polymethylmethacrylat, eingesetzt werden kann.

Auch die im Wesentlichen Polyamide enthaltende Fraktion wird vorzugsweise in einer Farbsortierung 205 zugeführt und die nach Farben sortierten Fraktionen anschließend einer Elastomerabtrennung 207 zur Entfernung von noch enthaltenen Elastomeren 209. Die von Elastomeren befreite Fraktion wird in einem Extruder 211 geschmolzen, wobei im Extruder vorzugsweise flüchtige Komponenten 213 oder sich zu flüchtigen Substanzen zersetzende Komponenten entfernt werden. Die im Extruder 211 erzeugte Schmelze kann dann ebenfalls in einer Schmelzefiltration 215 von festen Bestandteilen 217 gereinigt werden, so dass eine im Wesentlichen Polyamide enthaltende Schmelze 219 erhalten wird, die zu einem entsprechenden Granulat verarbeitet werden kann. Hierbei ist allerdings zu berücksichtigen, dass in der Regel eine Mischung aus unterschiedlichsten Polyamiden erhalten ist und diese nicht sortenrein vorliegen. Im Falle einer Mischung von unverträglichen Polyamiden sind diese nach dem heutigen besten Stand der Technik nicht mechanisch zu trennen. In diesem Fall kann so eine Mischung einem chemischen Recycling zugeführt werden. Auch ist in diesem Fall eine Kompatibilisierung im Extruder 211 durchführbar.

Die dritte schwere Fraktion 157, die im Wesentlichen Polyoxymethylen, hochgefüllte Polymere und halogenhaltige Polymere enthält, wird einer spektroskopischen Sortierung 221 zugeführt, in der eine im Wesentlichen chlorhaltige Polymere, insbesondere PVC, enthaltende Fraktion 223 aus der dritten schweren Fraktion 157 abgetrennt wird. Die spektroskopische Sortierung 221 wird dabei vorzugsweise mittels UV-Spektroskopie oder XRF-Spektroskopie durchgeführt. Die dabei erhaltene, im Wesentlichen chlorhaltige Polymere, insbesondere PVC, enthaltende Fraktion 223 kann zur weiteren Aufarbeitung einer Farbsortierung 225 oder alternativ oder zusätzlich einer Sortierung nach Elastizität zugeführt werden.

In einer nachfolgenden Elastomerabtrennung 227 können Elastomere 229 abgetrennt werden. Alternativ ist es auch möglich, einen zur Elastomerabtrennung 227 eingesetzten Gummiabscheider zur Trennung der im Wesentlichen chlorhaltige Polymere, insbesondere PVC, enthaltenden Fraktion in Weich-PVC und Hart-PVC einzusetzen. Die von Elastomeren 229 befreiten chlorhaltige Polymere, insbesondere PVC, enthaltenden Fraktionen werden vorzugsweise in einem Extruder 231 mit mindestens einer Entgasungszone zur Entfernung flüchtiger Komponenten 233 oder sich zu flüchtigen Substanzen zersetzenden Komponenten geschmolzen. Die Schmelze 239 kann dann in einer Schmelzefiltration 235 von festen Verunreinigungen 237 gereinigt werden und anschließend zu einem Granulat oder anderen Halbzeugen geformt werden.

Die nach der Abtrennung der chlorhaltigen Polymere in der spektroskopischen Sortierung 221 verbleibende Fraktion 241 enthält insbesondere Brom und Antimon in erhöhten Konzentrationen. Die Konzentration an Brom und Antimon ist dabei in der Regel so hoch, dass diese verbleibende Fraktion 241 als Brom- und Antimonquelle wirtschaftlicher ist als natürliche Vorkommen.

Zur Weiterverarbeitung wird die verbleibenden Fraktion 241 einer spektroskopischen Sortierung 243 zugeführt, in der hochgefüllte Verbundstoffe, insbesondere hochgefüllte Glasfaser-Composite, Polyoxymethylene wie POM-h und POM-c sowie deren Alloys, Polybutylenterephthalat, Polyphenylensulfid und weitere Polymere als Ausschussfraktion 245 abgetrennt werden, um die Gehalte an Brom und Antimon weiter zu erhöhen.

Hierzu wird vorzugsweise in einem ersten Schritt mittels UV-Spektren oder XRF-Spektren nach Brom sortiert und in der Regel ein bromreiches ABS/HIPS-Gemisch erzeugt, das nachfolgend elektrostatisch in eine bromreiche ABS-Fraktion und eine bromreiche HIPS-Fraktion getrennt wird. Diese Auftrennung in ABS und HIPS ermöglicht das Recycling der Kunststoffkomponenten bei der nachfolgenden Verarbeitung.

Die Ausschussfraktion 245 kann mit geeigneten Dichteschnitten und Sortierprozessen weiter in die einzelnen Komponenten aufgeteilt werden. Hierdurch können insbesondere POM, PBT und die Gruppe der Polysulfone und Polysulfide zurückgewonnen werden. Wenn für diese technischen Kunststoffe Reinheiten von größer als 99 % erzielt werden sollen, ist derzeit für einen wirtschaftlichen Prozess eine entsprechende Anlagengröße von mindestens 200 000 Jahrestonnen Verarbeitungskapazität erforderlich.

Aus der bromhaltigen Fraktion 244, die in der spektroskopischen Sortierung 243 erhalten wird, können in einer nachfolgenden Elastomerabtrennung 247 Elastomere 249 abgetrennt werden. Anschließend werden in einem Aufbereitungsschritt 251 aus den bromhaltigen Fraktionen, insbesondere der bromhaltigen ABS-Fraktion und der bromhaltigen HIPS-Fraktion, mit geeigneten Lösungsmitteln die bromierten Flammhemmer gelöst. Durch die vorhergehende Trennung in ABS und HIPS kann einer nachfolgenden Extrusion eine weitgehend bromfreie Polymermatrix erhalten werden. Die so erhaltene von bromierten Flammhemmern befreiten Polymere werden in einer Schmelzefiltration 253 von festen Verunreinigungen 255 befreit und anschließend werden die zur Entfernung der bromierten Flammhemmer eingesetzten Lösungsmittel in einer Lösemittelrückgewinnung 257 abgetrennt. Die so abgetrennten Lösungsmittel 259 können erneut zur Abtrennung der bromierten Flammhemmer eingesetzt werden. Neben den Lösungsmitteln werden in der Lösemittelrückgewinnung 257 vorzugsweise auch Abfallstoffe 261 abgetrennt, so dass Granulate oder Halbzeuge 263 erhalten werden, die im Wesentlichen lösungsmittelfrei, frei von bromierten Flammhemmern und frei von weiteren unerwünschten Verunreinigungen sind und insbesondere im Wesentlichen ABS oder HIPS enthalten.

Unabhängig von den eingesetzten Polymeren können in jeder der vorstehend beschriebenen Extrusionen für die Wiederverwendung der Polymere notwendige Additive zugegeben werden, um die teilweise veralteten Kunststofftypen auf das heute übliche Niveau der Anwendungen zu bringen. Dies können zum Beispiel Antioxidantien, Schlagzähmodifizierer, Kettenverlängerer, Kettenreduzierer, UV-Stabilisatoren, innere oder äußere Gleitmittel, Alloy-Partner oder auch Neuware sein.

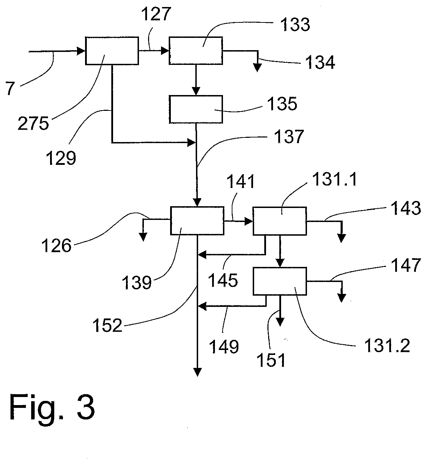

Figur 3 zeigt eine alternative Ausführungsform der Vorsortierung für die Aufarbeitung der ersten schweren Fraktion 7.

Im Unterschied zu der in Figur 2 gezeigten Vorsortierung wird bei der in Figur 3 dargestellten Vorsortierung die erste schwere Fraktion 7 zunächst mit dem Überkornsieb 275 in eine grobe Fraktion 127 und eine feine Fraktion 129 getrennt. Die Maschenweite des Überkornsiebs 275 ist dabei von der Stegweite der nachfolgenden Wassertische 131.1, 131.2 abhängig und entspricht vorzugsweise der Stegweite der Wassertische.

Um auch die aus dem Überkornsieb 125 entnommene grobe Fraktion 127 aufarbeiten zu können, ist es notwendig, die einzelnen Partikel auf eine Größe zu zerkleinern, dass diese mittels der Wassertische 131.1, 131.2 weiter sortiert werden können. Hierzu wird die grobe Fraktion 127 zunächst einem Windsichter 133 zugeführt, in dem die anorganischen, insbesondere metallischen, Bestandteile 134 aus der groben Fraktion 127 entfernt werden, die eine nachfolgende Mühle 135, insbesondere die Schneiden der Mühle 135 beschädigen können. Nach dem Abtrennen der anorganischen, insbesondere metallischen Bestandteile, die die Mühle beschädigen können, wird die grobe Fraktion in die Mühle 135 eingebracht und die einzelnen Partikel der groben Fraktion werden so zerkleinert, dass eine weitere Sortierung mittels der nachfolgenden Wassertische 131.1, 131.2 möglich ist. Um zu verhindern, dass den Wassertischen Partikel aus der groben Fraktion zugeführt werden, die noch nicht ausreichend klein sind, ist es vorteilhaft, die die Mühle verlassende grobe Fraktion zunächst zu sieben und die Partikel, die als Überkorn im Sieb verbleiben, erneut der Mühle 135 zuzuführen. Hierbei ist es alternativ auch möglich, die die Mühle verlassende Fraktion wieder dem Überkornsieb 125 zuzuführen, so dass die ausreichend zerkleinerten Partikel als feine Fraktion 129 entnommen werden und die zu großen Partikel als Überkorn über den Windsichter 123 erneut in die Mühle 135 gelangen.

Alternativ und bevorzugt weist die Mühle 135 jedoch ein Schneidsieb auf, durch das die ausreichend zerkleinerten Partikel entnommen werden. Die noch nicht ausreichend zerkleinerten Partikel werden erneut dem Mahlvorgang zugeführt. Auf diese Weise wird die grobe Fraktion in der Mühle in Partikel zerkleinert, deren Größe der Größe der Partikel der feinen Fraktion entspricht.

Wenn die Mühle ein Schneidsieb aufweist, so dass nur die hinreichend zerkleinerten Partikel die Mühle verlassen, werden die zerkleinerten Partikel der groben Fraktion, die die Mühle verlassen haben und die feine Fraktion 127 wieder zu einer ersten schweren, metallfeien Fraktion 137 miteinander vermischt.

Wenn die die Mühle 135 verlassende Fraktion erneut dem Überkornsieb 275 zugeführt wird, erfolgt die Mischung der ersten leichten Fraktion 129 und der zerkleinerten groben Fraktion 127 bereits auf dem Überkornsieb 275, so dass in diesem Fall die feine Fraktion 129 bereits die erste schwere, metallfreie Fraktion ist.

Die erste schwere, metallfreie Fraktion 137 wird einem Klassierer 139 zugeführt, in dem die in der ersten schweren, metallfreien Fraktion enthaltenen Kunststoffe von ebenfalls enthaltenen Leiterplattenpartikeln, die im Wesentlichen aus glasfasergefülltem Polycarbonat aufgebaut sind, getrennt werden. Die Trennung erfolgt dabei vorzugsweise in einem Aufstrom von Wasser oder einem wässrigen Medium mit Salz, Ton oder Eisenstaub, wobei bei diesem Verfahren die erste schwere, metallfreie Fraktion 137 mittels Zwangsförderung gegen den Aufstrom eingebracht wird, so dass die in der ersten schweren, metallfreien Fraktion enthaltenen Partikel luftfrei und vollständig benetzt werden. Hierdurch können die Leiterplattenpartikel effizient aus der ersten schweren, metallfreien Fraktion entfernt werden. Auf diese Weise entsteht im Klassierer 139 eine an Leiterplattenpartikeln reiche Fraktion 141, die den zwei seriell arbeitenden Wassertischen 131.1, 131.2 zugeführt wird. Mittels des ersten Wassertischs 131.1 werden eine metallreiche Fraktion 143 und eine im Wesentlichen Kunststoffe enthaltende Fraktion 145 abgetrennt. Die verbleibende Fraktion wird dem zweiten Wassertisch 131.2 zugeführt, auf dem ebenfalls eine metallreiche Fraktion 147 und eine im Wesentlichen Kunststoffe enthaltende Fraktion 149 abgetrennt werden. Neben der metallreichen Fraktion 147 und der im Wesentlichen Kunststoffe enthaltenden Fraktion 149 verbleibt noch eine Abfallfraktion 151. Sowohl die metallreichen Fraktionen 143, 147 als auch die Abfallfraktion 151 enthalten in der Regel noch Wertstoffe, so dass diese weiteren Aufarbeitungsverfahren zugeführt werden können.

Die im Wesentlichen Kunststoffe enthaltenden Fraktionen 145, 149 enthalten in der Regel eine hochkomplexe Zusammensetzung verschiedenster Kunststoffe, die insbesondere für technische Anwendungen relevant sind. Aus diesem Grund ist es besonders bevorzugt, wenn, wie hier dargestellt, die im Wesentlichen Kunststoffe enthaltenden Fraktionen 145, 149 mit der im Klassierer 139 abgetrennten Kunststoffe enthaltenden Fraktion 152 vermischt und weiter aufbereitet werden.

Die weitere Aufarbeitung erfolgt dann vorzugsweise wie vorstehend für Figur 2 beschrieben.

## Patentansprüche

1. Verfahren zur Rückgewinnung von Kunststoffen aus einem Gemisch von mindestens zwei Polymeren, wobei ein Polymer mit einem Anteil von 1 bis 99 Gew.-% enthalten ist, umfassend:
(a) Durchführen einer ersten Dichtetrennung (3) bei einer Dichte im Bereich von 1,14 bis 1,18 g/cm³, wobei eine erste leichten Fraktion (5), die Polyolefine und styrolbasierte Polymere enthält, und eine erste schwere Fraktion (7) erhalten werden;
(b) Zuführen der ersten leichten Fraktion zu einer zweiten Dichtetrennung (13) bei einer Dichte im Bereich von 1,00 bis 1,03 g/cm³, wobei eine zweite leichte Fraktion (15), die ungefüllte Polyolefine enthält, und eine zweite schwere Fraktion (17), die styrolbasierte Polymere und gegebenenfalls gefüllte Polyolefine enthält, erhalten werden;
(c) Zuführen der ersten schweren Fraktion (7) zu einer dritten Dichtetrennung (153) bei einer Dichte im Bereich von 1,18 bis 1,24 g/cm³, wobei die erste schwere Fraktion (7) in eine dritte leichte Fraktion (155), die Polyamide, Polycarbonate und Methacrylat-basierte Polymere enthält, sowie eine dritte schwere, Polyoxymethylen, hoch gefüllte Polymere und halogenhaltige Polymere enthaltende Fraktion (157) getrennt wird;
(d) Auftrennen aller Fraktionen in im wesentlichen sortenreine Polymere enthaltende Fraktionen,
wobei vor der dritten Dichtetrennung (153) metallhaltige Komponenten (143, 147) aus der ersten schweren Fraktion (7) entfernt werden.

2. Verfahren gemäß Anspruch 1, **dadurch gekennzeichnet, dass** die zweite schwere Fraktion (17) in
• eine im wesentlichen styrolbasierte Polymere enthaltende Fraktion (51) und
• eine im wesentlichen gefüllte Polyolefine enthaltende Fraktion (55) getrennt wird.

3. Verfahren gemäß Anspruch 2, **dadurch gekennzeichnet, dass** die Trennung der zweiten schweren Fraktion (17) in mindestens einer triboelektrischen Sortierung, mindestens einer spektroskopischen Sortierung oder einer Kombination aus triboelektrischer und spektroskopischer Sortierung durchgeführt wird.

4. Verfahren gemäß einem der Ansprüche 1 bis 3, **dadurch gekennzeichnet, dass** aus der zweiten leichten Fraktion (15) Leichtstoffe (27) und Abfallstoffe (23) abgetrennt werden und so eine im wesentlichen ungefüllte Polyolefine enthaltende Fraktion (29) erhalten wird.

5. Verfahren gemäß Anspruch 4, **dadurch gekennzeichnet, dass** die Abtrennung der Leichtstoffe (27) und Abfallstoffe (23) aus der zweiten leichten Fraktion (15) in mindestens einer triboelektrischen Sortierung, mindestens einer spektroskopischen Sortierung oder Kombinationen aus triboelektrischer und spektroskopischer Sortierung durchgeführt wird.

6. Verfahren gemäß einem der Ansprüche 1 bis 5, **dadurch gekennzeichnet, dass** die erste schwere Fraktion (7) zur Entfernung der metallhaltigen Komponenten (143, 147)
(i) in eine grobe Fraktion (127) und eine feine Fraktion (129) getrennt wird,
(ii) gegebenenfalls anorganische und metallische Bestandteile (134) aus der groben Fraktion (127) entfernt werden,
(iii) die grobe Fraktion (127) zerkleinert wird,
(iv) anschließend die feine Fraktion (129) und die grobe Fraktion (127) wieder miteinander zu einer ersten schweren, metallfreien Fraktion (137) vermischt werden, und
(v) die metallfreie Fraktion (137) vom Feinanteil befreit wird.

7. Verfahren gemäß einem der Ansprüche 1 bis 6, **dadurch gekennzeichnet, dass** die dritte leichte Fraktion (155) in
• eine im Wesentlichen hoch gefüllte Polyolefine enthaltende Fraktion (264)
• eine im Wesentlichen Polyamide enthaltende Fraktion (171),
• eine im Wesentlichen Polycarbonat enthaltende Fraktion (161) und
• eine im wesentlichen Methacrylat-basierte Polymere enthaltende Fraktion (167) getrennt wird.

8. Verfahren gemäß Anspruch 7, **dadurch gekennzeichnet, dass** die Trennung der dritten leichten Fraktion (155) in mindestens einer röntgenreflektionsspektroskopischen oder mindestens einer triboelektrischen Sortierung, mindestens einer spektroskopischen Sortierung oder Kombinationen aus triboelektrischer und spektroskopischer Sortierung durchgeführt wird.

9. Verfahren gemäß einem der Ansprüche 1 bis 8, **dadurch gekennzeichnet, dass** die dritte schwere, Polyoxymethylen, hoch gefüllte Polymere und halogenhaltige Polymere enthaltende Fraktion (157) in
• eine Polyoxymethylen enthaltende Fraktion,
• eine gefüllte Polymere enthaltende Fraktion,
• eine bromhaltige Fraktion (244) und
• eine im Wesentlichen chlorhaltige Polymere enthaltende Fraktion (223) getrennt wird.

10. Verfahren gemäß Anspruch 9, **dadurch gekennzeichnet, dass** die Trennungen der dritten schweren, Polyoxymethylen, hoch gefüllte Polymere und halogenhaltige Polymere enthaltenden Fraktion (157) in die Polyoxymethylen enthaltende Fraktion, die gefüllte Polymere enthaltende Fraktion, die bromhaltige Fraktion (244) und die im Wesentlichen chlorhaltige Polymere enthaltende Fraktion (223) in jeweils mindestens einer triboelektrischen Sortierung, mindestens einer spektroskopischen Sortierung, oder Kombinationen aus triboelektrischer und spektroskopischer Sortierung durchgeführt werden, wobei die halogenhaltigen, insbesondere brom- oder chlorhaltigen, Polymere mit mindestens einer röntgenreflektionsspektroskopischen Sortierung angereichert werden.

11. Verfahren gemäß einem der Ansprüche 1 bis 10, **dadurch gekennzeichnet, dass** aus den im Wesentlichen sortenreine Polymere enthaltenden Fraktionen (29, 53, 59, 75, 161, 167, 171, 223, 244) Elastomere abgetrennt werden.

12. Verfahren gemäß einem der Ansprüche 1 bis 11, **dadurch gekennzeichnet, dass** die im Wesentlichen sortenreinen Polymere enthaltenden Fraktionen (29, 53, 59, 75, 161, 167, 171, 223, 244) zu einem Granulat extrudiert werden.

13. Verfahren gemäß Anspruch 12, **dadurch gekennzeichnet, dass** in der Extrusion bei Unterdruck flüchtige Komponenten (39, 85, 101, 117, 181, 197, 213, 233) oder sich zu flüchtigen Komponenten zersetzende Komponenten durch eine oder mehrere Vakuumentgasungen abgetrennt werden und/oder feste oder elastische Komponenten (43, 89, 105, 121, 185, 201, 217, 237, 255) durch eine oder mehrere Schmelzefiltrationen (41, 87, 103, 119, 183, 199, 215, 235, 253) abgetrennt werden.

## Claims

1. Method for recovering plastics from a mixture of at least two polymers, wherein one polymer is contained with a share of 1% to 99% by weight, comprising:
(a) carrying out a first density separation (3) at a density in the range from 1.14 to 1.18 g/cm³, to give a first light fraction (5), which contains polyolefins and styrene-based polymers, and a first heavy fraction (7);
(b) supplying the first light fraction to a second density separation (13) at a density in the range from 1.00 to 1.03 g/cm³, to give a second light fraction (15), which contains unfilled polyolefins, and a second heavy fraction (17), which contains styrene-based polymers and possibly filled polyolefins;
(c) supplying the first heavy fraction (7) to a third density separation (153) at a density in the range from 1.18 to 1.24 g/cm³, wherein the first heavy fraction (7) is separated into a third light fraction (155), which contains polyamides, polycarbonates and methacrylate-based polymers, and a third heavy fraction (157) containing polyoxymethylene, highly filled polymers and halogen-containing polymers;
(d) separating all the fractions into fractions substantially containing single-grade polymers,
wherein, before the third density separation (153), metal-containing components (143, 147) are removed from the first heavy fraction (7).

2. Method according to Claim 1, **characterized in that** the second heavy fraction (17) is separated into
• a fraction (51) substantially containing styrene-based polymers and
• a fraction (55) substantially containing filled polyolefins.

3. Method according to Claim 2, **characterized in that** the separation of the second heavy fraction (17) is carried out in at least one triboelectric sorting, at least one spectroscopic sorting or a combination of triboelectric and spectroscopic sorting.

4. Method according to any of Claims 1 to 3, **characterized in that** lightweight substances (27) and waste substances (23) are separated off from the second light fraction (15) to give a fraction (29) substantially containing unfilled polyolefins.

5. Method according to Claim 4, **characterized in that** the separation of the lightweight substances (27) and waste substances (23) from the second light fraction (15) is carried out in at least one triboelectric sorting, at least one spectroscopic sorting or combinations of triboelectric and spectroscopic sorting.

6. Method according to any of Claims 1 to 5, **characterized in that** the first heavy fraction (7), for the removal of the metal-containing components (143, 147),
(i) is separated into a coarse fraction (127) and a fine fraction (129),
(ii) any inorganic and metallic constituents (134) are removed from the coarse fraction (127),
(iii) the coarse fraction (127) is comminuted,
(iv) the fine fraction (129) and the coarse fraction (127) are subsequently mixed again with one another to give a first heavy, metal-free fraction (137), and
(v) the metal-free fraction (137) is freed from the fines.

7. Method according to any of Claims 1 to 6, **characterized in that** the third light fraction (155) is separated into
• a fraction (264) substantially containing highly filled polyolefins,
• a fraction (171) substantially containing polyamides,
• a fraction (161) substantially containing polycarbonate, and
• a fraction (167) substantially containing methacrylate-based polymers.

8. Method according to Claim 7, **characterized in that** the separation of the third light fraction (155) is carried out in at least one X-ray reflection-spectroscopic or at least one triboelectric sorting, at least one spectroscopic sorting or combinations of triboelectric and spectroscopic sorting.

9. Method according to any of Claims 1 to 8, **characterized in that** the third heavy fraction (157) containing polyoxymethylene, highly filled polymers and halogen-containing polymers is separated into
• a fraction containing polyoxymethylene,
• a fraction containing filled polymers,
• a bromine-containing fraction (244), and
• a fraction (223) substantially containing chlorine-containing polymers.

10. Method according to Claim 9, **characterized in that** the separations of the third heavy fraction (157) containing polyoxymethylene, highly filled polymers and halogen-containing polymers into the fraction containing polyoxymethylene, the fraction containing filled polymers, the bromine-containing fraction (244) and the fraction (223) substantially containing chlorine-containing polymers are carried out in respectively at least one triboelectric sorting, at least one spectroscopic sorting, or combinations of triboelectric and spectroscopic sorting, wherein the halogen-containing, more particularly bromine- or chlorine-containing, polymers are accumulated with at least one X-ray reflection-spectroscopic sorting.

11. Method according to any of Claims 1 to 10, **characterized in that** elastomers are separated off from the fractions (29, 53, 59, 75, 161, 167, 171, 223, 244) substantially containing single-grade polymers.

12. Method according to any of Claims 1 to 11, **characterized in that** the fractions (29, 53, 59, 75, 161, 167, 171, 223, 244) substantially containing single-grade polymers are extruded to give pellets.

13. Method according to Claim 12, **characterized in that** components (39, 85, 101, 117, 181, 197, 213, 233) which are volatile in the extrusion at subatmospheric pressure or components which decompose to give volatile components are separated off by one or more vacuum degassings and/or solid or elastic components (43, 89, 105, 121, 185, 201, 217, 237, 255) are separated off by one or more melt filtrations (41, 87, 103, 119, 183, 199, 215, 235, 253).

## Revendications

1. Procédé de récupération de matériaux synthétiques à partir d'un mélange d'au moins deux polymères, un polymère étant contenu en une proportion de 1 à 99% en poids, comprenant :
(a) la réalisation d'une première séparation par masse volumique (3) à une masse volumique dans la plage de 1,14 à 1,18 g/cm³, une première fraction (5) légère, qui contient des polyoléfines et des polymères à base de styrène, et une première fraction (7) lourde étant obtenues ;
(b) introduction de la première fraction légère dans une deuxième séparation par masse volumique (13) à une masse volumique dans la plage de 1,00 à 1,03 g/cm³, une deuxième fraction (15) légère, qui contient des polyoléfines non chargées, et une deuxième fraction (17) lourde, qui contient des polymères à base de styrène et le cas échéant des polyoléfines chargées, étant obtenues ;
(c) introduction de la première fraction (7) lourde dans une troisième séparation par masse volumique (153) à une masse volumique dans la plage de 1,18 à 1,24 g/cm³, la première fraction (7) lourde étant séparée en une troisième fraction (155) légère, qui contient des polyamides, des polycarbonates et des polymères à base de méthacrylate, ainsi qu'en une troisième fraction (157) lourde contenant du polyoxyméthylène, des polymères hautement chargés et des polymères halogénés ;
(d) séparation de toutes les fractions en des fractions contenant essentiellement des polymères de type pur,
les composants métalliques (143, 147) étant éliminés de la première fraction (7) lourde avant la troisième séparation par masse volumique (153).

2. Procédé selon la revendication 1, **caractérisé en ce que** la deuxième fraction (17) lourde est séparée en
- une fraction (51) contenant essentiellement des polymères à base de styrène et
- une fraction (55) contenant essentiellement des polyoléfines chargées.

3. Procédé selon la revendication 2, **caractérisé en ce que** la séparation de la deuxième fraction (17) lourde est effectuée dans au moins un tri triboélectrique, au moins un tri spectroscopique ou dans une combinaison d'un tri triboélectrique et d'un tri spectroscopique.

4. Procédé selon l'une des revendications 1 à 3, **caractérisé en ce que** des substances légères (27) et des déchets (23) sont séparés à partir de la deuxième fraction (15) légère et une fraction (29) contenant essentiellement des polyoléfines non chargées est ainsi obtenue.

5. Procédé selon la revendication 4, **caractérisé en ce que** la séparation des substances légères (27) et des déchets (23) à partir de la deuxième fraction (15) légère est effectuée dans au moins un tri triboélectrique, au moins un tri spectroscopique ou dans une combinaison d'un tri triboélectrique et un tri spectroscopique.

6. Procédé selon l'une des revendications 1 à 5, **caractérisé en ce que**, pour l'élimination des composants métalliques (143, 147), la première fraction (7) lourde
(i) est séparée en une fraction (127) grossière et en une fraction (129) fine,
(ii) le cas échéant les constituants inorganiques et métalliques (134) sont éliminés de la fraction (127) grossière,
(iii) la fraction (127) grossière est broyée,
(iv) ensuite, la fraction (129) fine et la fraction (127) grossière sont de nouveau mélangées l'une avec l'autre en une première fraction (137) lourde, exempte de métaux et
(v) la fraction (137) exempte de métaux est libérée de la proportion de fines.

7. Procédé selon l'une des revendications 1 à 6, **caractérisé en ce que** la troisième fraction (155) légère est séparée en
- une fraction (264) contenant essentiellement des polyoléfines hautement chargées,
- une fraction (171) contenant essentiellement des polyamides,
- une fraction (161) contenant essentiellement du polycarbonate et
- une fraction (167) contenant essentiellement des polymères à base de méthacrylate.

8. Procédé selon la revendication 7, **caractérisé en ce que** la séparation de la troisième fraction (155) légère est effectuée dans au moins un tri spectroscopique avec réflexion des rayons X ou au moins un tri triboélectrique, au moins un tri spectroscopique ou dans des combinaisons d'un tri triboélectrique et un tri spectroscopique.

9. Procédé selon l'une des revendications 1 à 8, **caractérisé en ce que** la troisième fraction (157) lourde contenant du polyoxyméthylène, des polymères hautement chargés et des polymères halogénés est séparée en
- une fraction contenant du polyoxyméthylène,
- une fraction contenant des polymères chargés,
- une fraction (244) bromée et
- une fraction (223) contenant essentiellement des polymères chlorés.

10. Procédé selon la revendication 9, **caractérisé en ce que** les séparations de la troisième fraction (157) lourde contenant du polyoxyméthylène, des polymères hautement chargés et des polymères halogénés en fraction contenant du polyoxyméthylène, fraction contenant des polymères chargés, fraction (244) bromée et fraction (223) contenant essentiellement des polymères chlorés sont réalisées dans à chaque fois au moins un tri triboélectrique, au moins un tri spectroscopique ou des combinaisons de tri triboélectrique et de tri spectroscopique, les polymères halogénés, en particulier les polymères bromés ou chlorés, étant enrichis par un tri spectroscopique avec réflexion des rayons X.

11. Procédé selon l'une des revendications 1 à 10, **caractérisé en ce que** des élastomères sont séparés à partir des fractions (29, 53, 59, 75, 161, 167, 171, 223, 244) contenant essentiellement des polymères de type pur.

12. Procédé selon l'une des revendications 1 à 11, **caractérisé en ce que** les fractions (29, 53, 59, 75, 161, 167, 171, 223, 244) contenant essentiellement des polymères de type pur sont extrudés en un granulat.

13. Procédé selon la revendication 12, **caractérisé en ce que** dans l'extrusion des composants (39, 85, 101, 117, 181, 197, 213, 233) volatils à une dépression ou des composants se décomposant en composants volatils sont séparés par un ou plusieurs dégazages sous vide et/ou des composants solides ou élastiques (43, 89, 105, 121, 185, 201, 217, 237, 255) sont séparés par une ou plusieurs filtrations en masse fondue (41, 87, 103, 119, 183, 199, 215, 235, 253).
